# EUROPEAN PATENT SPECIFICATION

(11) **EP 0 434 224 B1**
(45) Date of publication and mention of the grant of the patent: **07.04.1999**
(21) Application number: 90312712.4
(22) Date of filing: 22.11.1990
(51) Int. Cl.: G06F 17/60

(54) **Integrated trading**
Intergrierter Handel
Vente intégrée

(30) Priority: 22.11.1989 US 440971; 22.11.1989 US 441156
(43) Date of publication of application: 26.06.1991
(73) Proprietor: REUTERS LIMITED, London, EC4P 4AJ (GB)
(72) Inventor: Ordish, Christopher J., Virginia Water, Surrey GU 25 4AW (GB); Richards, John M., Blewbury, Didcot, Oxfordshire OX11 90A (GB)
(74) Representative: Waldren, Robin Michael

(56) References cited:
- GB-A- 1 489 573
- GB-A- 2 139 042
- US-A- 3 573 747
- US-A- 4 412 287

## Description

The present invention relates to effectuating trades of trading instruments both through automatic matching, in which buyers and sellers who are willing to trade with one another based on specified criteria may automatically trade when matching events occur satisfying these criteria, and through video converstaional negotiated trades, in which buyers and sellers who are willing to trade with one another may do so through exchanging video conversational textual messages, and are particularly to the methodology of integrating these different types of trades in a system which enables individual keystations to accomplish both types of trades.

Information retrieval systems for financial information, such as stock market type of information and money market information, normally employ a transfer of data in a high performance, real time information retrieval network in which update rates, retrieval rates and subscriber and/or user population are generally very high. An example of such a system is REUTERS DEALING SERVICE, which is used in the foreign exchange market, or GLOBEX, which is used by the Chicago Mercantile Exchange for electronic trading in the commodities market. Such systems, while providing rapid communication capability between subscribers, have been previously dedicated to one type of trading capability, albeit video conversation capability to effectuate negotiated trades through textual messages exchanged between potential counterparties, such as in DEALING, or automatic matching capability to automatically effectuate trades between anonymous potential counterparties meeting certain user specified criteria, such as in GLOBEX. Each of these types of systems have their place in the market and serve particular needs where appropriate. However, because of world of trading of financial instruments and the requisite needs associated therewith are dynamic and rapidly change with changes in the surrounding circumstances, at one moment it may be desirable to trade anonymously in an automatic matching environment while at the very next moment it may be desirable to openly trade in a video conversational negotiating environment, or to do both, for the same or different trading instruments. Thus, although there have been successful trading systems doing one of these types of trades, there are no known prior art systems which effectively integrate both of these types of trades in a single system so as to permit a trader, using a single keyboard and display screen, to selectively switch between the two types of trading systems dependent on his own desires and needs at any given time in the trading environment. This is so despite the known technique in the prior art of tying common keyboard, such as described in US-A-4,404,551, in which a common keyboard is used to both communicate with multiple computer systems and multiplex or dynamically route or select video displays on one or more VDUs from a plurality of simultaneously provided composite video signal inputs from these multiple computer systems in response to unique keyboard generated character codes.

In addition, despite known prior art systems which have attempted to integrate voice and data, such as disclosed in US-A-4,612,416; 4,598,367; 4,653,045; 4,475,189; 3,344,401; and 4,635,251, none of these prior art systems, has integrated conversational trading, to enable negotiated trades, with automatic matching trades, to enable anonymously matched trades, in a shared environment. For example, the system disclosed in US-A-4, 598,367 is a financial quotation system employing a keypad input and a synthesized speech output, but does not integrate different types of trading transactions in a shared environment. Similarly, US-A-4, 509,167; 4,612,416; and 4,635,251, which are not directed to financial information per se, merely disclose systems which integrate voice mail in a telephone communication system. US-A-4,653,045 and 4,475,189 also disclose telephone systems which integrate voice and data, with these systems being used in telephone conferencing. US-A-3,344,401, discloses another type of telephone system in which voice is integrated with teletype for communicating with a remote data processor in an inquiry system; however, the disclosed system is not utilized in a dynamic trading environment, such as one involving matching transactions and/or video conversational negotiated trades.

Moreover, automatic matching trading systems are well known, such as described in US-A-3,573,747; 3,581,072; 4,412,287; 4,677,552; and 4,674,044, as well as in EP-A-90305753; 0,399,850; 90305763; and GB-A-2,227,625; 2,226,217; 1489573 and 2,224,141. However, although these prior art automatic matching systems are capable of automatically matching bids and offers, and may employ a central or host computer to accomplish this, such as disclosed in US-A-4,677,552; 4,674,044; and 3,573,747; by way of example, they are incapable of enabling video conversational negotiated trades to also occur, thereby requiring a totally different system to be employed if the trader desires to then execute such a trade. This can provide significant trading disadvantages to the trader.

In addition, although the REUTERS DEALING SERVICE, enables multiple conversations to be carried out by a given subscriber in real time and in association with data base retrieval of supplementary data, such as described in US-A-4,531,184 and 4,525,779, by way of example, as well as in the aforementioned EP and GB specifications relating to video conversational trading systems, none of these systems integrates an automatic matching trading system with one capable of providing video conversational negotiated trades.

Apart from the above, there are no known trading systems of this type in which a keep alive signal is periodically provided to the system in order to notify the system that a given subscriber keystation is operating properly so that all outstanding active bids and offers associated with the keystation can be automatically deleted from the trading system if the keystation fails or is unable to provide the periodic keep alive signal to the system. This enables a trader who becomes mechanically locked out from active trading by keystation failure to be automatically removed from the trading base so as to ensure that completed trades are accomplished only between active traders who are able to participate in the trading transactions which are occurring, whether they are anonymous trades or negotiated trades.

Another feature lacking in the known prior art relates to the provision of a high speed, reliable system for providing a common ticket generation scheme for providing trading ticket information to a back office computer without continual polling, irrespective of the type of deal or trade which has occurred. Although reliable ticket generation schemes are known, such as described in the above aforementioned EP and GB specifications relating thereto, and although methods and systems for dynamically controlling the content of a local receiver data base from a transmitted data base in an information retrieval communication network for collecting financial information are also known, such as described in US-A-4,745,559, no prior art systems are known which provide common ticket generation for automatic matching trades and for video converational negotiated trades, nor are any such prior art systems known in which both types of completed trades may be stored together for retrieval.

Thus, there are no known prior art systems or methods which can readily combine the advantages, speed and reliability of both automatic matching and negotiated video conversational trades in a single system so as to provide the individual subscribers or keystations with maximum flexibility and optimal efficiency to effectuate the type of trade demanded by the time and circumstances available. These disadvantages of the prior art are overcome by the method of the present invention.

The present invention is set out in its various aspects in the independent claims of the present application.

An example of the invention will now be described with reference to the accompanying drawings in which:
Fig 1 is an overall system functional block diagram of a system capable of carrying out an integrated trading method;
Fig 2 is a functional block diagram of a typical client site in the system of Fig. 1, illustrating a typical preferred integrated terminal controller;
Fig 3 is a functional block diagram similar to Fig. 2, illustrating the portion of the presently preferred integrated terminal controller relating to the carrying out of video conversational negotiated trades;
Fig 4 is a diagramatic illustration of a typical communication network for carrying out video conversational negotiated trades;
Fig 5 is a diagramatic illustration of a typical terminal computer associated with a typical keystation in the system of Fig. 1;
Fig 6 is a diagramatic illustration, similar to Fig. 5, of a typical conversation server portion of the presently preferred integrated terminal controller of Fig. 2;
Fig 7 is a functional block diagram, similar to Fig. 4, illustrating the network associated with carrying out automatic matching trades in the system of Fig. 1;
Fig 8 is a functional block diagram of the network of Fig. 7 illustrating the flow of information in connection with the entry of a bid-and the entry of an offer in connection with effectuating automatic matching trades between potential counterparties in the system of Fig. 1;
Fig 9 is a functional block diagram similar to Fig. 8, of the flow of information in the network of Fig. 7 in connection with a hit bid or trade in connection with the carrying out of automatic matching trades between potential counterparties in the system of Fig. 1;
Fig 10 is a diagramatic illustration of a typical integrated video screen display for a typical integrated keystation in the system of Fig. 1 when the small font option has been selected;
Fig 11 is a diagramatic illustration, similar to Fig. 10, of a typical integrated video display screen layout when matching has been selected by the integrated keystation in Fig.1;
Fig 12 is a diagramatic illustration, similar to Fig. 10, of the video screen layout of Fig. 11 when the video conversational trade option has been selected with the display of Fig. 12 toggling with the display of Fig. 11;
Fig 13 is a diagramatic illustration similar to Fig. 10 of a typical integrated video screen display for a typical integrated keystation in the system of Fig. 1 when the large font option has been selected and the matching trade option has been selected;
Fig 14 is a diagramatic illustration similar to Fig. 13, of a large font option for a typical integrated video screen display of a typical integrated keystation in the system of Fig. 1 when the video conversational trade option has been selected, with the screen of Fig. 14 toggling with the screen of Fig. 13;
Fig 15 is a diagramatic illustration of a typical integrated keyboard associated with a typical integrated keystation in the system of Fig. 1;
Fig 16 is an illustration of a typical matching ticket produced as a result of a matching trade in the system of Fig. 1;
Fig 17 is a diagramatic illustration, similar to Fig. 16, of a typical conversation ticket produced in response to the completion of video conversational negotiated trade in the system of Fig. 1;
Fig 18 is a diagramatic state diagram of the sequence of operations associated with log on and log off a typical integrated keystation in the system of Fig. 1;
Figs 19-20 comprise a logic flow diagram of the log on/log off sequence of operations illustrated in the state diagram of Fig. 18;

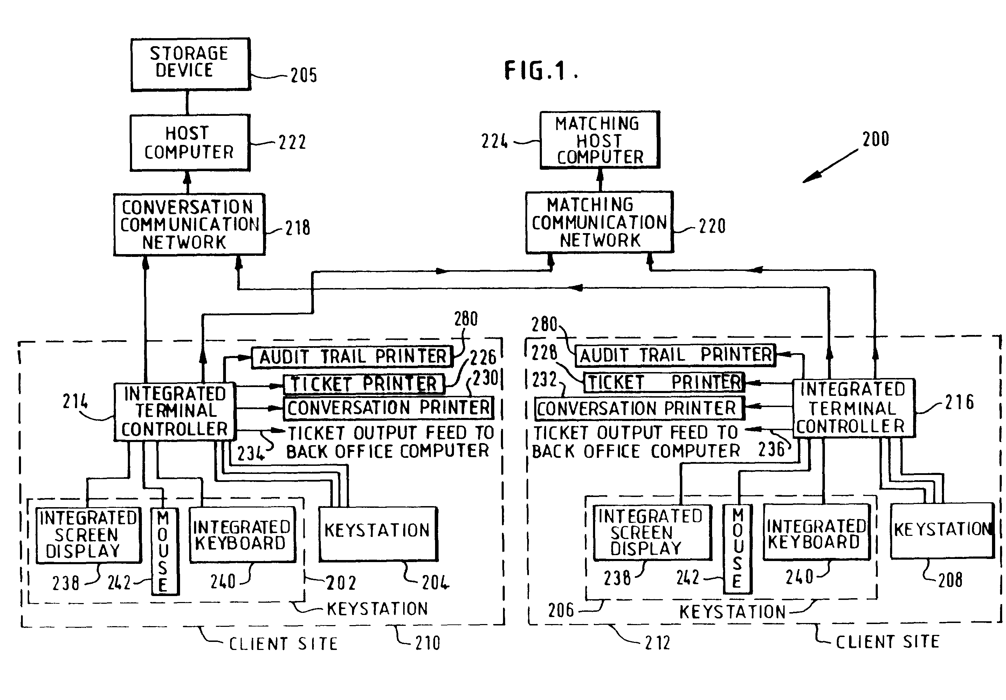

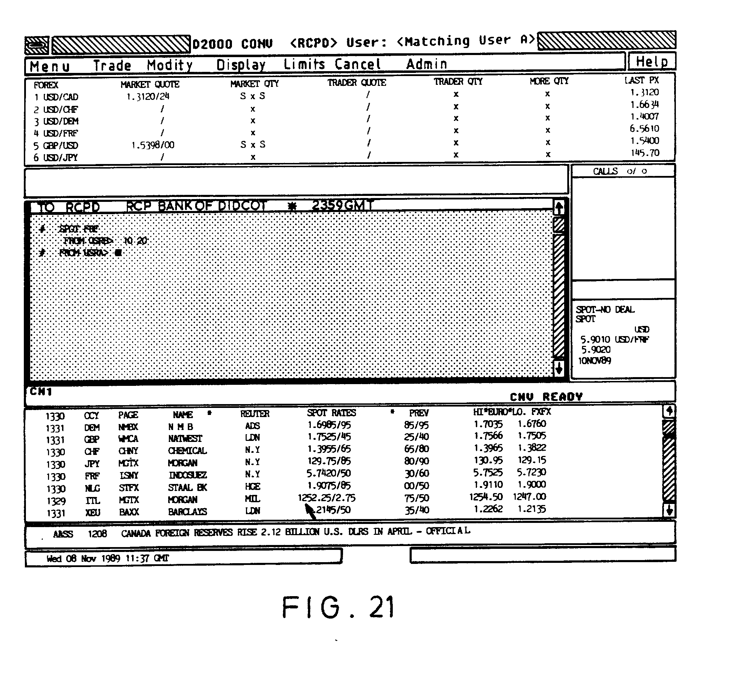

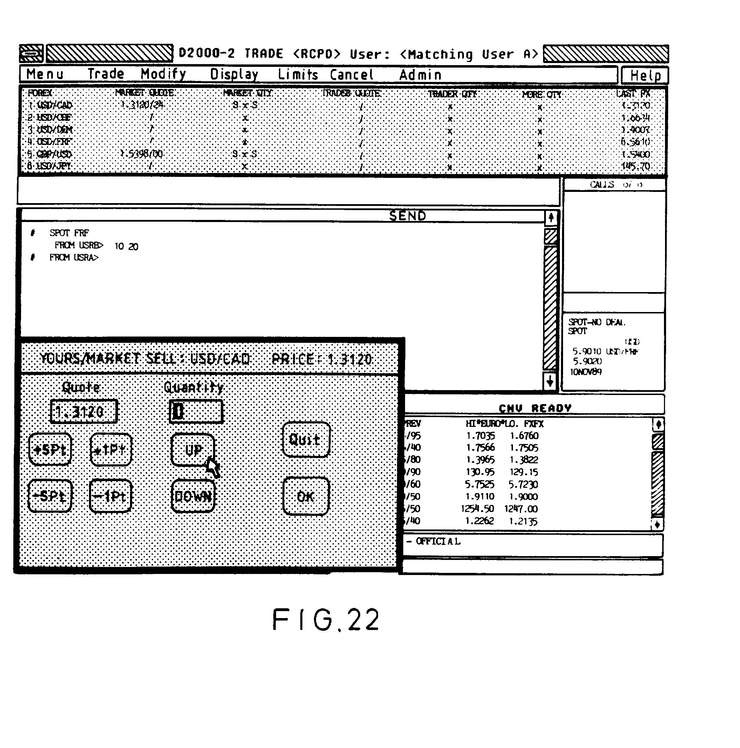

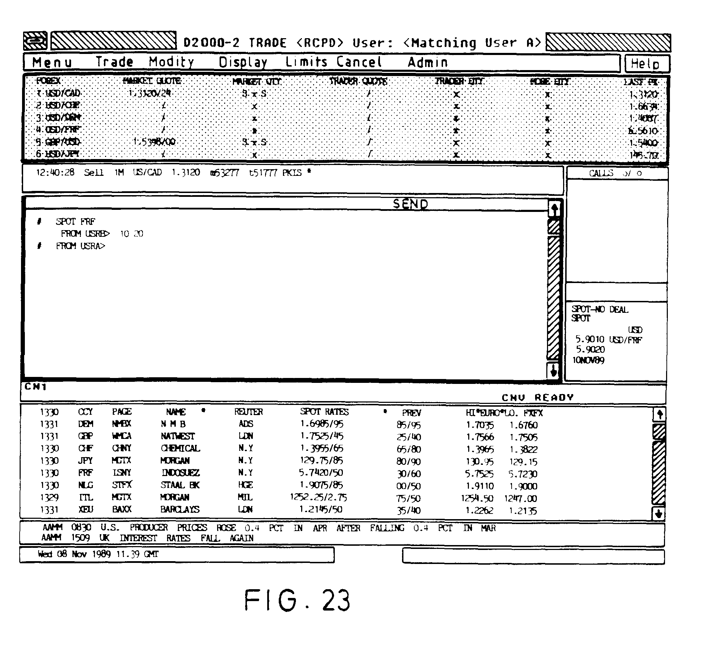

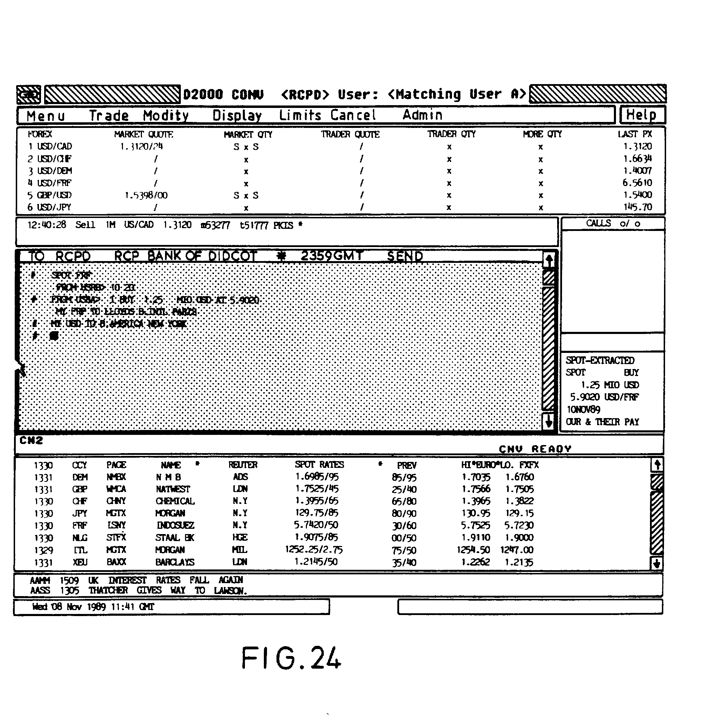

Figs 21-24 are diagramatic illustrations of typical integrated video screen displays for a typical integrated keystation in the system of Fig. 1, illustrating the integrated trading capabilities of the system of Fig. 1, with Fig. 21 illustrating a typical integrated video display in which both information relating to automatic matching trades and information relating to video conversational negotiated trades is present on the screen, but no trade has occurred with that keystation, with Fig 22 illustrating the screen of Fig. 21 with information about to be transmitted in connection with completion of a matching transaction, with Fig. 23 illustrating the automatic matching trade represented in Fig. 21 as having been executed and match notification having been received by the keystation, and with Fig 24 illustrating the integrated display screen of Fig. 21 when a video conversation negotiated trade has been completed;
Fig 25 is a logic flow diagram of the operation of a typical integrated keystation in the system of Fig. 1 in response to receipt of a match notification signal;
Fig 26 is a logic flow diagram, similar to Fig. 25, of the operation of a typical integrated keystation in the system of Fig. 1 in response to receipt of a match ticket or conversation ticket;
Figs 27-29 are logic flow diagrams, similar to Fig. 25, illustrating the operation of a typical integrated keystation in the system of Fig. 1 with respect to the keep alive feature, with Fig. 27 illustrating the operation of the integrated keyboard, and Figs. 28 and 29 illustrating the operation of the terminal computer portion of the integrated keystation;
Fig 30 is a functional block diagram illustrating the flow of information in connection with a typical matching transaction;
Fig 31 is a diagramatic illustration of a portion of the trading ticket output process utilizable in the system of Fig. 1 concerned with the ticket output protocol;
Fig 32 is a logic flow diagram of a ticket output process;
Fig 33 is a logic flow diagram of the operation of the integrated terminal controller when a new trading ticket has been generated in accordance with the trading ticket output process of Fig. 32;
Fig 34 is a logic flow diagram of the operation of the database server portion of the integrated terminal controller in the system of Fig. 1 with respect to requests for tickets received by the database server from a back office computer;
Fig 35 is a logic flow diagram of the data display application for initiating a fast conversational contact message using the screen pointer in a typical integrated keystation in the system of Fig. 1; and
Fig 36 is a logic flow diagram of the conversation application processing of a fast conversational contact message initiated in accordance with Fig. 35 for expanding the contact message and establishing conversational contact in the system of Fig. 1.

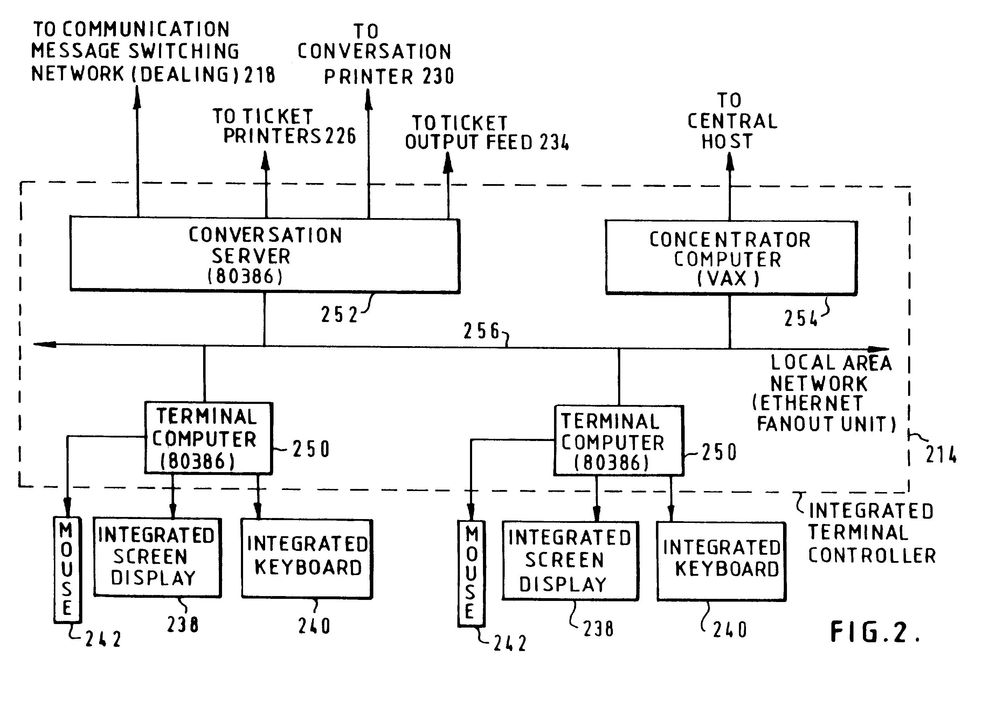

An integrated trading system 200, as will be described in greater detail hereinafter, is capable of effecting trades of trading instruments both through automatic matching, in which buyers and sellars who are willing to trade with one another based on specified criteria automatically trade when matching events occur satisfying these criteria, and through video conversational negotiated trades, in which buyers and sellers who are willing to trade with one another may do so through exchanging video conversational textual messages. Individual integrated keystations, with four such integrated keystations 202, 204, 206 and 208 being shown by way of example in Fig. 1, are able to accomplish both types of trades. In addition, as will be described in greater detail hereinafter individual keystations which are only capable of performing onr of these types of trades can trade with another keystation of that type an integrated keystation which is capable of performing both types of trades. In this regard, as shown and preferred in Figs. 1 and 2, an integrated terminal controller with two such client sites 210, 212 being illustrated by way of example, in Fig. 1. One such integrated terminal controller 214, 216 is illustrated at each client site 210, 212, respectively, by way of example, in Fig. 1.

As shown and preferred in Figs. 1 and 2, a typical integrated terminal 214, may accommodate a plurality of integrated keystations 202, 204 by way of example, and is the system interface for these keystations 202, 204 with the other keystations 206, 208 in the system 200 in order to enable the different types of trades to be effected with these integrated keystations 202, 204, 206, 208. As shown by way of example in Fig. 1, each type of trade, namely video converstational negotiated trades and automatic matching trades, has its own associated communication network 218, 220 respectively, since the population of individual subscribers involved in automatic matching trades. In this regard, there is a host computer 222 associated with the routing of conversational trade and there is a separate matching host computer 224 which is actually responsible for the matching trades which occur through the matching communication network 220, such as described in greater detail in the above European publications. Suffice it to say that the present control and operation of automatic matching trades is preferably the same as described in these EP and GB specifications, with the exception of the involvement of the integrated terminal controller 214, 216, with reference to a typical terminal controller 214 to be described in greater detail hereinafter, and the use of the integrated keystation 202, 204, 206, 208 with the operation of a typical integrated keystation 202 to be described in greater detail hereinafter.

A common ticket generation scheme and ticket output feed to the back office computer is used for both the video conversational negotiated trades performed by the system 200 and the automatic matching trades performed by the system 200. Similarly, with respect to the video conversational negotiated trades performed by the system 200, these trades are preferably performed in the same manner as described in GB-A-2,226,217 and GB-A-2,227,625, with the exception, once again of the involvement of the integrated terminal controller 214, 216 and the integrated keystations 202, 204, 206, 208, which enables both this type of trade and the automatic matching trades to be integrated in the same system 200 and provided on a common video display 238, and which provides a common ticket generation scheme for both types of trades. With respect to the common ticket generation scheme, except for the differences to be described hereinafter, the ticket generation in the system 200, which also describes the provision of the ticket output fee to the back office computer.

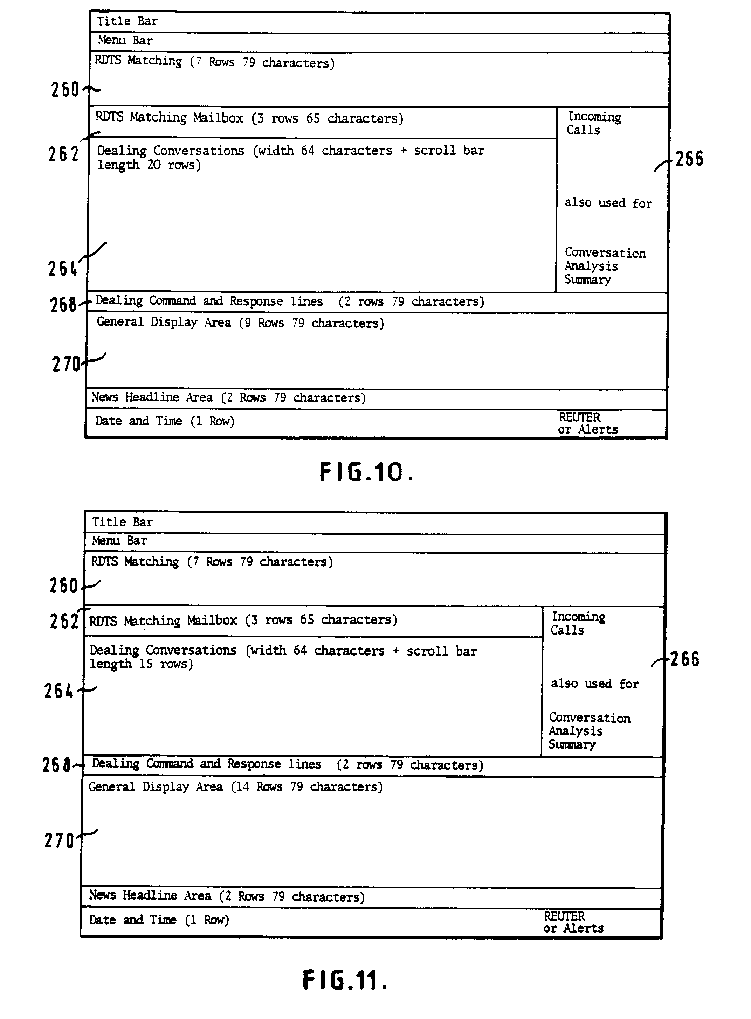

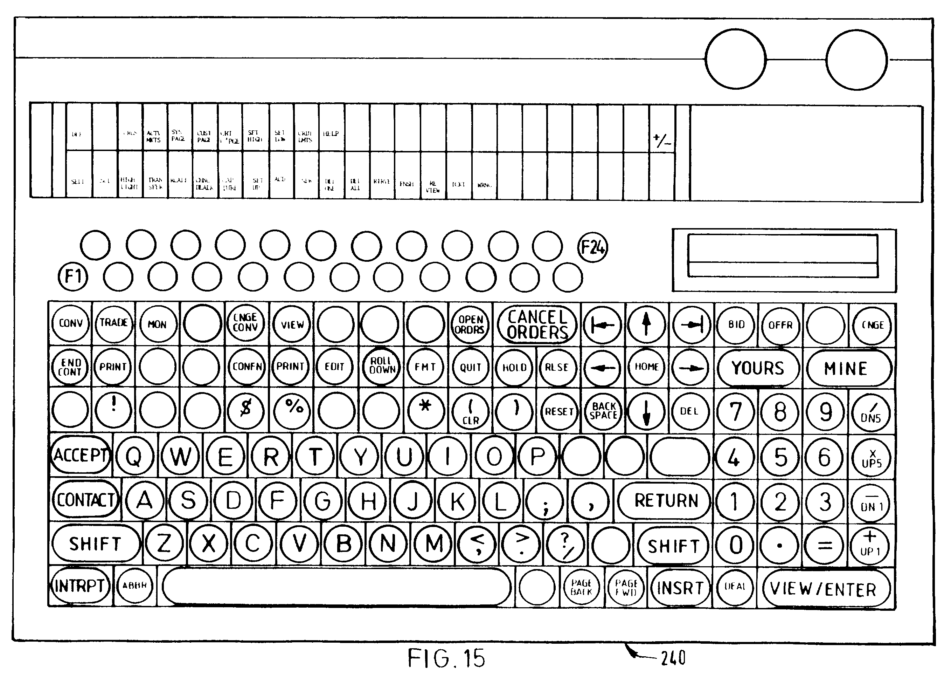

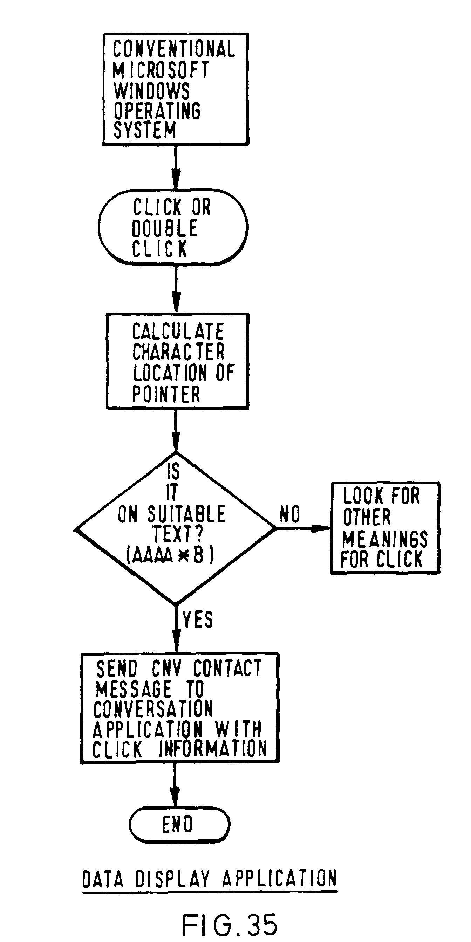

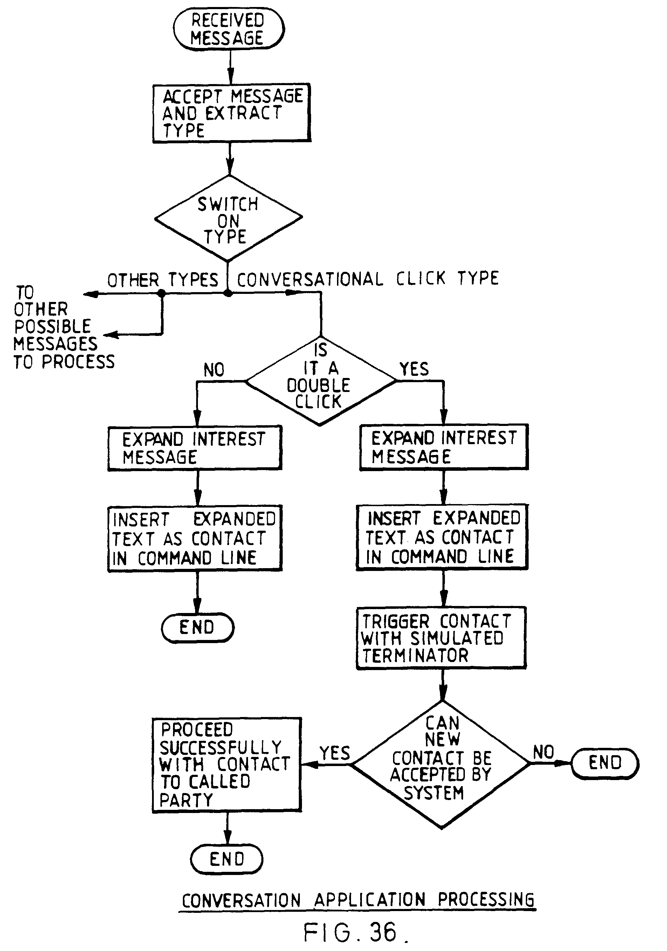

As shown in Fig. 1, each of the integrated terminal controllers 214, 216, has an associated ticket printer 226, 228 respectively, and an associated conversation printer 230, 232, respectively, as well as a ticket output feed 234, 236, respectively, to its associated back office computer. With respect to the individual integrated keystations 202, 204, 206, 208 to be described in greater detail hereinafter, a typical integrated keystation 202 preferably has an integrated screen display 238, to be described in greater detail hereinafter and illustrated by way of example, in Figs. 10-14 and Figs. 21-24, an integrated keyboard 240, such as the typical keyboard illustrated in Fig. 15, and a conversational mouse 242 which may preferably be used to accomplish fast conversational contact, by way of example, such as in the manner described in GB-A-2,227,625, and illustrated, by way of example in Figs. 35-36 which correspond to Figs. 11-12 of GB-A-2,227,625.

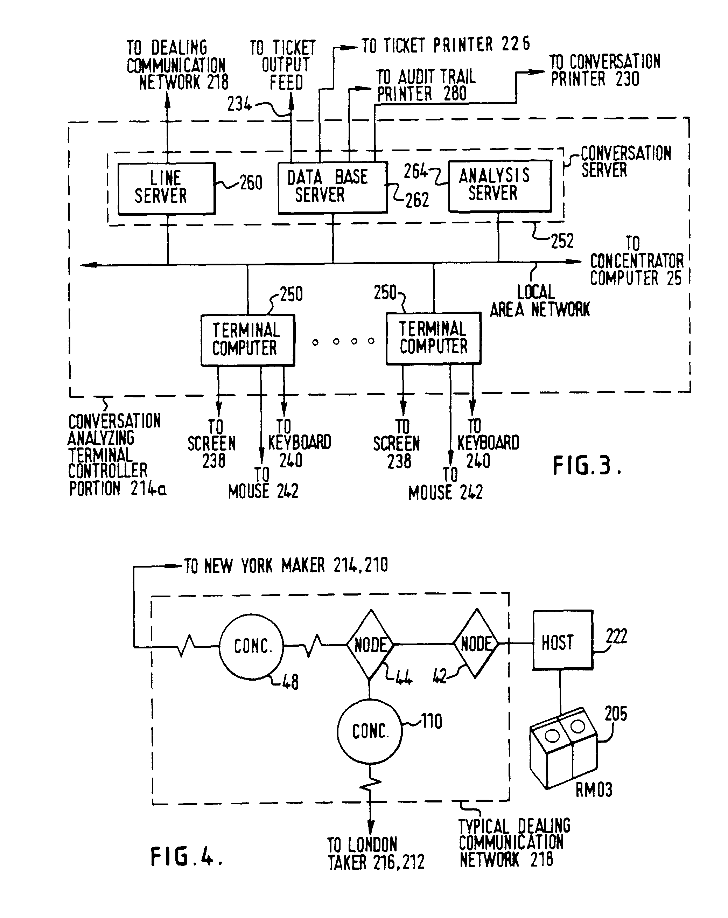

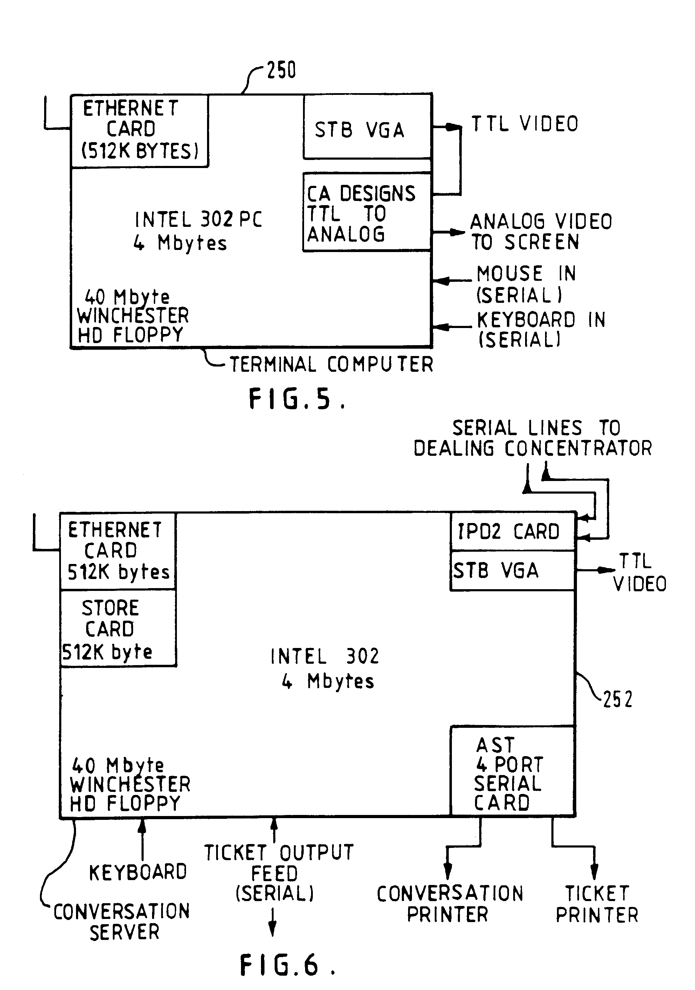

As shown in Fig. 2, the integrated terminal controller 214 comprises a terminal computer 250 associated with each keystation. The terminal computer 250 is preferably a conventional computer configuration, such as an 80386 Intel 302 computer for each integrated keystation 202, 204, 206, 208. In addition, the integrated terminal controller 214 also preferably includes a conversation server computer 252, such as one comprising another 80386 Intel 302 computer, and which is shown in greater detail in Fig. 3, and a concentrator computer 254, such as a MICRO VAX 2000 computer, for communicating with the matching host computer 224 through the matching communication network 220. The conversation server 252, the concentrator computer 254, and the terminal computers 250 associated with the various integrated keystations 202, 204, for example, are all preferably tied together through a conventional local area network 256, such as an Ethernet network, with the concentrator computer 254 preferably communicating with the conversation server 252 via the keystation terminal computer 250 connected to the local area network 256. As shown and preferred in Figs. 2 and 3, and as will be described in greater detail hereinafter, the conversation server 252, which is shown in greater detail in Fig. 6, not only handles video conversational trading, but preferably ties together, in the integrated system 200, the printing and ticket generation for both automatic matching trades and video conversational negotiated trades performed by a given integrated keystation 202, 204 associated with that integrated terminal controller 214, and is the interface with the associated back office computer for the ticket output feed for trades performed at that client site 210, irrespective of the type of trade performed.

As shown and preferred in Fig. 3, although the conversation server 252 is represented by only one block in Fig. 2, in reality it may be comprised of a line server 264 which enables, for example, the provision of context sensitive prompts during conversational trading, such as described in greater detail in GB-A-2,226,217. Thus, the conversation server 252, such as illustrated in Fig. 6, performs several different functions in the system 200 of the present invention. The conversation server 252 handles communications with the conversation comunnication network 218, such as DEALING, maintains a database with respect to DEALING conversations, trade logs and tickets, drives various printers 226, 230, analyzes conversations in progress, and generates a serial ticket output feed, via path 234, for provision of this feed to the back office computer. By way of example, in accomplishing this task, the conversation server computer 252, may, by way of example comprise at least 4 megabytes of memory, a 40 megabyte hard disk, a high density floppy, an Ethernet card with 512 kilobytes of memory, conventional RS232 Serial Connections, an STB VGA extra memory video card generating a TTL output, and the appropriate software to communicate with the conversation communication network 218. These components are illustrated, by way of example, in Fig. 6. With respect to the associated printers 226, 230, the conversation printer 230 preferably prints conversations as they are completed, whereas the ticket printer 226 preferably prints a single ticket for each matching trade as well as each confirmed video conversational negotiated trade. Of course, other printers may be associated with the integrated terminal controller 214, such as an audit trail printer 280 or other standby printers if desired. With respect to the typical terminal computer 250, such a terminal computer 250 is illustrated in further detail, by way of example, in Fig. 5. Thus, by way of example, the terminal computer 250 such as an Intel 302 PC, which may also be employed for the conversation server 252 as illustrated in Fig. 6, preferably includes an RS232 input for a serial keyboard 240 and a serial mouse 242, a 512K Ethernet card, a conventional device for driving an analog screen 238, a 40 megabyte hard disk, and at least 3 megabytes of memory. It should be noted, that the terminal computer 250 illustrated in Fig. 5 is merely illustrated by way of example, and other conventional computers capable of use with the system 200 may also be employed instead of or in conjunction with terminal computer 250.

It should be noted with reference to Fig. 2 that, although only one conversation server 252 is illustrated as being connected to the local area network 256, if desired, a plurality of conversation servers 252 can be connected to the same section of the Ethernet Network 256, with there still being a single concentrator computer 254 for supporting matching connected to the local area network 256. By way of example, each conversation server 252 may support up to 12 keystations for conversational trading and matching trades, with the concentrator computer 254, by way of example, being a Micro VAX 2000 computer having a Ethernet interface, a hard disk, a pair of Asynchronous Serial lines to the matching communication network 220, and appropriate software, such as referred to in the aforementioned EP and GB specifications. It should be noted that, by way of example, in the instance of 12 keystations being associated with a given integrated terminal controller 214, the 12 keystations need not all be supported by the same conversation server 252, as mentioned above, even though the 12 keystations could be supported by a single concentrator computer 254.

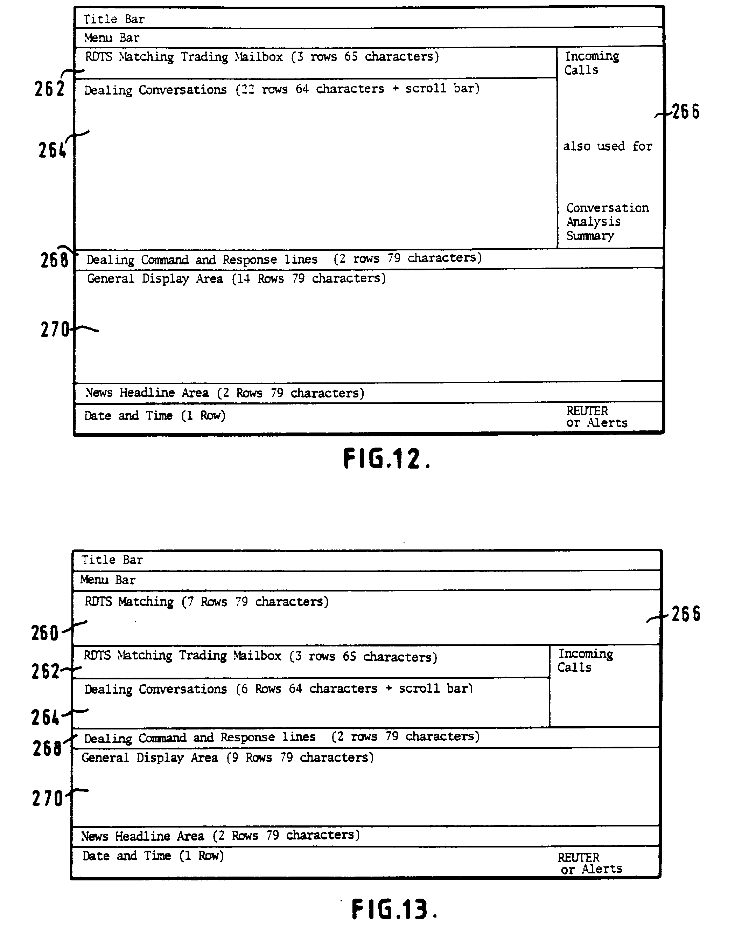

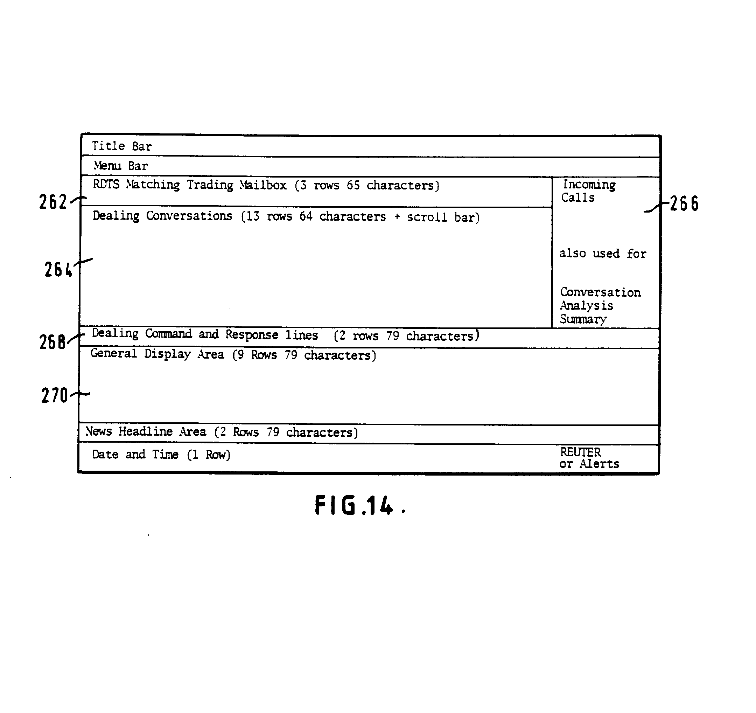

As will be described with reference to Figs. 10 - 14, different screen layouts for the integrated screen display 238 may be provided, with Fig. 10 illustrating the small font option preferably for use with large video screens such as 12 - 14 inch screens, and with Figs. 13 and 14 illustrating the large font option preferably for use with smaller video screens such as 10 inch screens or when the user requires a simple display. Figs. 11 and 12 illustrate the screen layout of the integrated screen display 238 in which, by way of example, a 14 row general display area is provided by overlaying the matching trade and conversational trade windows in the display, with Fig. 11 illustrating the integrated screen display 238 when matching has been selected by the user at the keystation, and with Fig. 12 illustrating the integrated screen display 238 when conversational trading has been selected by the user at the keystation, with the integrated screen display 238 toggling between the layout illustrated in Fig. 11 and the layout illustrated in Fig. 12 depending on the option selected. Preferably, any of the screen layouts illustrated in Figs. 10 - 14 may be selected by the user at the keystation for providing the desired integrated screen display 238. In this regard, it should be noted that the keystation may be run under commercially available windowing software, such as Microsoft Windows 386 version 2.1, DOS 3.3 and the Windows version of the Workstation Environment (WSE). In the screen layout for the integrated screen display 238 illustrated in Fig. 10, the current entries in the market for potential automatic matching trades are preferably contained in area 260 with the results of the particular keystation' s recent automatic matching trade activity preferably being contained in the area immediately below and given reference number 262. As illustrated in Fig. 10, in the area immediately below that is the window which contains conversational trading activity and may, by way of example, contain up to four such separate trading conversations of the type referred to in the aforementioned patents and EP and GB specficications relating to conversational trading. This area has been given reference numeral 264. Immediately to the right of that area in the screen layout illustrated in Fig. 10 is an area designated for displaying incoming calls as well as conversation analysis summaries, such as referred to in the aforementioned patents and EP and GB specifications, with conversation analysis summary being described and referred to in the aforementioned GB-A-2,226,217, and with this area being given reference numeral 266. In connection with the display of multiple trading conversations in area 264, when conversational trading is selected by the integrated keystation given the screen layout of Fig. 10, preferably there is provision for a heading and at least 7 lines of the current conversation, and at least a heading and 1 line of text for up to three more trading conversations. Immediately below area 264 is a display area for Dealing or conversational trading command responses, with that area being designated with reference numeral 268. Below that area is an area designated as the general display area, given reference numeral 270, which may preferably contain other market related information, such as the REUTER MONITOR page. The same areas are preferably provided in the screen layouts illustrated in Figs. 11 and 12 with, however, the size of the general display area 270 being increased so as to provide more room for the general display area 270 in the screen layout in the integrated screen display 238. As can be seen in Figs. 11 and 12, which relate to the same screen layout in which the general display area 270 is larger, such as 14 rows as compared with the 9 rows provided in the example of Fig. 10, the larger size for the general display area 270 is accomplished preferably by overlaying the matching trade area 260 and the conversational trade area 264, with Fig. 11 illustrating the screen layout when a matching trade option has been selected by the integrated keystation and with Fig. 12 illustrating the same screen layout when a conversational trade option has been selected by the integrated keystation. In this regard, it should be noted that in the option illustrated in Fig. 11, the conversational trade area 264 is, by way of example, 15 rows in height, and the matching trade area 260 is 7 rows in height, whereas in the option illustrated in Fig. 12, the conversational trade area 264 has been increased to 22 rows, by way of example, by overlaying the 7 rows previously used for the matching area 260. Thus, as previously mentioned, the integrated keystation toggles between the screen layout of Fig. 11 and the screen layout of Fig. 12 depending on the trade option selected by the integrated keystation. With respect to the screen layouts illustrated in Figs. 13 and 14 for the integrated screen display 238, these screen layouts preferably have the same windows as the aforementioned screen layouts with, however, the number of rows in various areas being reduced so as to accommodate larger characters in the display. In this regard, in Fig. 13, which illustrates the integrated screen display 238 layout when matching has been selected, the incoming calls area 266 is reduced in size as is the conversational trade area 264, and the general display area 270 is the same size as in the option of Fig. 10. In Fig. 14, when the conversational trade option has been selected, the matching trade area 260 is overlayed by the conversational trade area 264 which is increased in size, by way of example, from the 6 rows of Fig. 13 to 13 rows in Fig. 14, and the incoming calls area, which is also used for conversation analysis summary, 266 is increased in size. Preferably, the integrated screen display 238 has a high resolution, such as 640 pixels horizontally by 480 pixels vertically, which is in line with the normal VGA standard, with the video being conventionally supplied by a Windows 386 driver and the STB VGA card in the terminal computer 250.

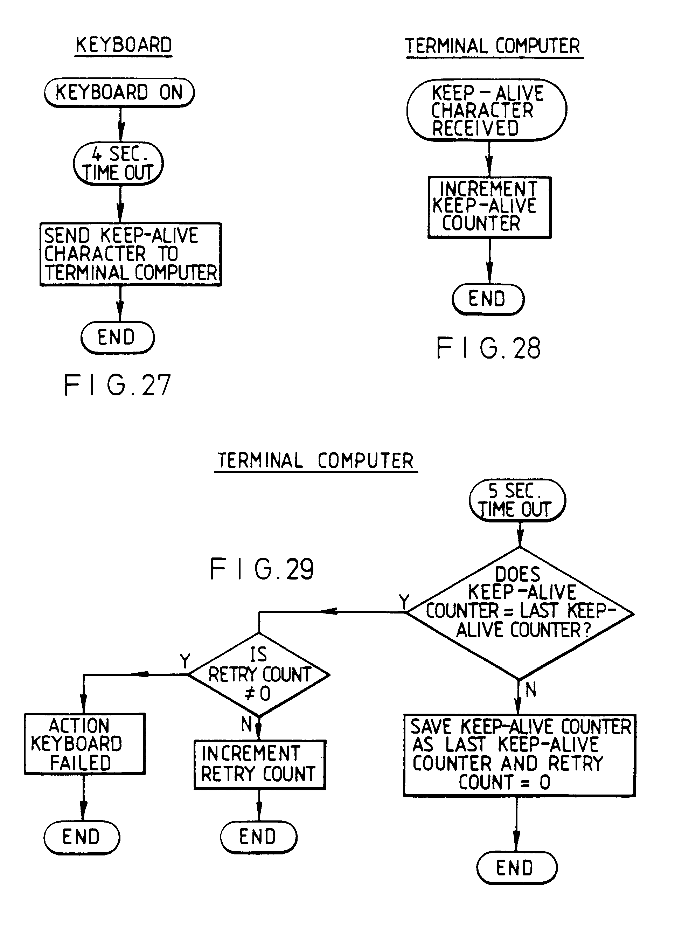

Referring now to Fig. 15, an integrated keyboard 240 contains keys which will enable the user to participate in both matching trades as well as in conventional trades in the system 200. For example, such a keyboard 240 may be obtained from Reuters, the assignee herein, under the designation DK101 or AK122/3, with all of the integrated keyboards 240 on a particular integrated terminal controller 214 preferably being of the same type. The system 200 uses keep alive signals from the integrated keyboard 240 in order promptly to detect keyboard failure since such failure would effectively mechanically disable the trader or keystation from participating in both matching and/or conversational trades through use of the system 200. The keep alive signal is preferably a special character which is sent to the terminal computer 250 of the keystation, at a predetermined periodic interval, such as every 4 or 5 seconds. This procedure is diagramatically illustrated in Fig. 27. When the terminal computer 250 receives these special keep alive character, it preferably increments a keep alive counter, with this procedure being illustrated in Fig. 28. The terminal computer 250 also preferably checks at a periodic interval, such as every 5 seconds, whether the keep alive counter has been incremented. If the counter has not been incremented from the previous count, this indicates to the terminal computer 250 that the keep alive signal or special character has not been received and that, consequently, the integrated keyboard 240 may have failed. This procedure is illustrated in Fig. 29. When the terminal computer 250 detects that the keyboard 240 has failed, the keystation removes all entries which it has placed in the matching market in connection with potential automatic matching trades and automatically terminates all its current conversations associated with conversational trading, and logs off. If desired, an alarm can also be provided at the keystation on the screen 238 indicating that the keyboard has failed. Thus, the keep alive signal periodically provided from the integrated keyboard 240 provides a heartbeat from the keyboard 240 to the terminal computer 250, which has been conventionally programmed in accordance with the procedures illustrated in Figs. 28 - 29, and which automatically removes the offers and bids associated with that keystation from the matching host computer 224 when it is detected that the integrated keyboard 240 has failed by failing to provide an appropriate heartbeat or keep alive signal to the terminal computer 250. Summarizing the above, when a keep alive signal is not provided and the terminal computer 250 detects that it has not been provided because the keep alive counter has not been incremented, four actions occur; namely, the user is informed that the keyboard 240 has failed, the user is logged off the keystation, contact is ended in all conversations which were active at the time in the conversational trading portion of the integrated trading system 200, and all prices which had been input to the matching host computer 224 by that keystation in connection with the automatic matching trading portion of the integrated system 200 are automatically removed from the matching host computer 224 database. Preferably, as shown and preferred in Fig. 29, if a keep alive signal is not detected in the first instance, then the terminal computer 250 retries again. If it is not detected after the second try, or second beat, then the terminal computer 250 indicates that the keyboard 240 has failed. In this regard, if a mouse 242 is provided at the keystation, preferably, the keystation may continue to operate if the mouse 242 fails as long as the integrated keyboard 240 is still functioning.

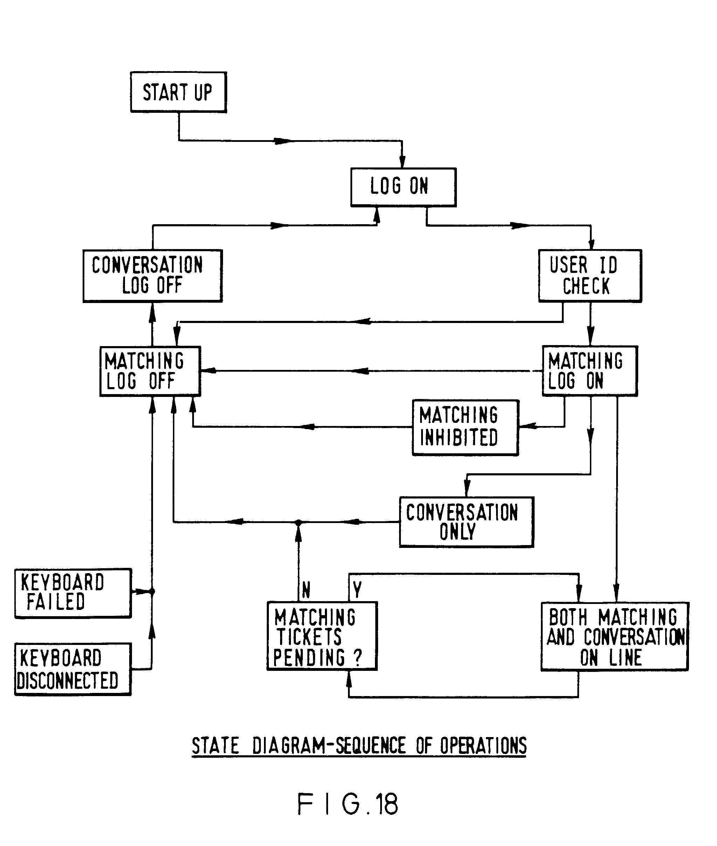

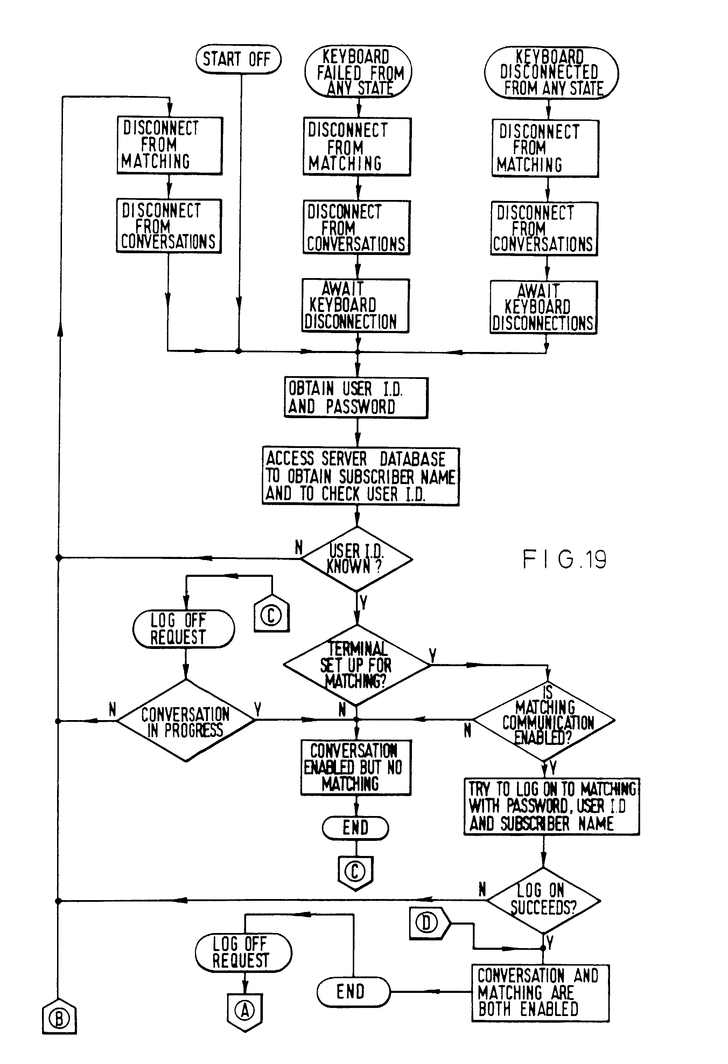

The function of logging on to the matching communication network 220 in order to effect automatic matching trades and to the conversation communication network 218 in order to effect video conversational negotiated trades is integrated in the system 200. Fig. 18 is a state diagram illustrating the sequence of operations in connection with the integrated log on/log off to the system 200, with Figs. 19-20 illustrating a logic flow diagram of the logic operations performed by the system 200 in connection with the sequence of operations illustrated in Fig. 18. Preferably, in order for the user or keystation to log on to the system 200, a user identifier is required as well as, preferably, a user password. Preferably, the user identifier is part of the set up data in the integrated terminal controller 214 and must be entered correctly on log on for the user. When this information is entered, the server database 262 and the integrated terminal controller 214 is accessed in order to obtain the subscriber name and to check the user I.D. If the user I.D. is known in the system 200, then the terminal or keystation 202 for example, is checked to see if it has been permissioned for matching. If it has, then the integrated keystation, 202 by way of example, tries to log on to the matching communication network 220 with the input password, subscriber name and user I.D. If log on succeeds to the matching communication network 220 the keystation 202 has now been logged on to both the conversation communication network 218 and the matching communication network 220, since log on to the conversation communication network 218 has not been inhibited. If, however, the keystation 202 cannot log on to the matching communication network 220, then the keystation 202 is preferably disconnected from both the matching communication network 220 and the conversation communication network 218 and the log on procedure is repeated, starting with the insertion of the user I.D. and password. If, however, matching communication for the keystation 202 is not enabled, as opposed to attempting to log on and failing to log on, then conversation communication may still be enabled with the conversation communication network 218.

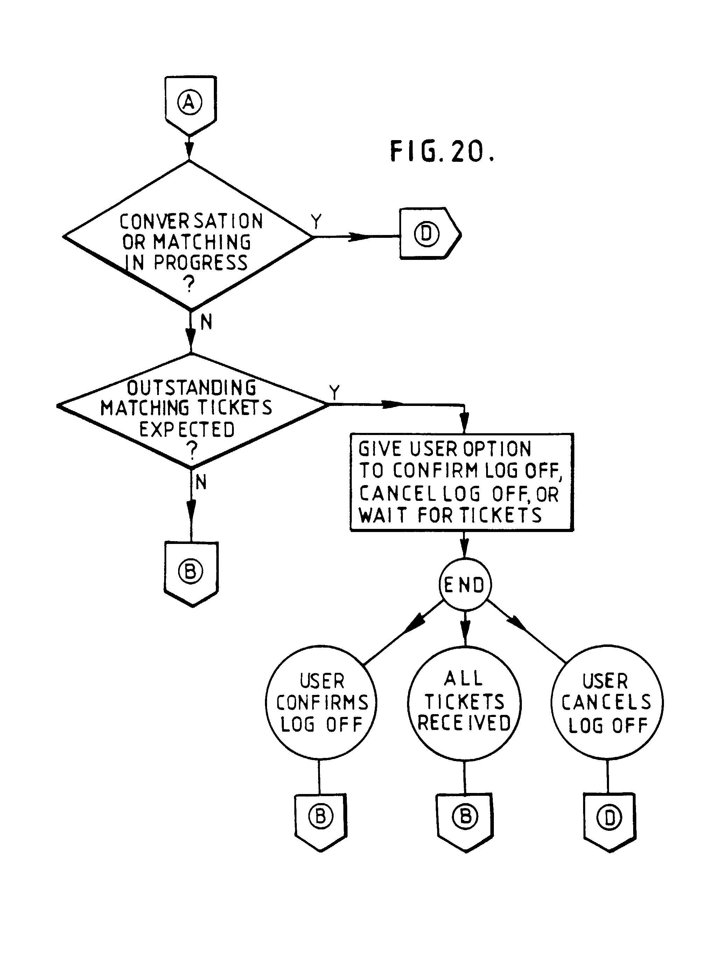

Referring to the log off procedure, assuming matching communication has not been enabled but conversation communication with the conversation communication network 218 had been enabled at the time of the log off request, then the system 200 checks to see if a conversation is in progress. If a conversation is in progress then the keystation 202 may not log off. However if a conversation is not in progress, then the keystation 202 may be disconnected from the conversation communication network 218. Similarly, if matching communication had been enabled and the keystation 202 had logged on to both the matching communication network 220 and the conversation communication network 218, the keystation 202 still could not log off if a conversation was in progress with that keystation 202. The keystation 202 would have to first terminate the conversation. Furthermore, as shown and preferred in Fig. 20, if a log off request were received from that keystation 202 which had been logged on to both the communication network 220 and the conversation communication network 218, then the system 200, and particularly the associated integrated terminal controller 214, would first determine whether any trading conversation or matching was in progress associated with that keystation 202 and, assuming it was not then in progress, the terminal controller 214 would then determine whether there were any outstanding matching tickets expected as a result of trades which had been completed but had not yet had a ticket generated. If there were no outstanding matching tickets expected, then the keystation 202 could disconnect from both matching and conversational trading. If however, there were outstanding matching tickets expected, then preferably the user would be given the option to confirm a log off, or cancel a log off, or wait for the tickets. If the user confirmed a log off or had received the tickets after waiting for them, the user could then disconnect from matching and conversational trading. If the user merely cancelled the log off, then conversation and matching trading would still be enabled. This would also be true if a conversational or matching trade associated with that keystation were still in progress. As also shown and preferred in Fig. 19, if the keyboard 240 either failed in any state in the sequence of operations or was disconnected during any state in the sequence of operations, the keystation 202 would be disconnected from both matching and conversational trading until reconnection of the keyboard 202. It should be noted from the above, that a keystation 202 may solely log on to conversational trading or automatic matching trading if that is its capability or desired intent. The purpose of the integrated log on is to enable a single keystation 202 to log on to both different types of trading systems, assuming it has that capability, with a single log on procedure. The software associated with the log on/log off procedure illustrated in Figs. 18 - 20 is written in C language for use with the 80386 terminal computer 250 in which this software is resident.

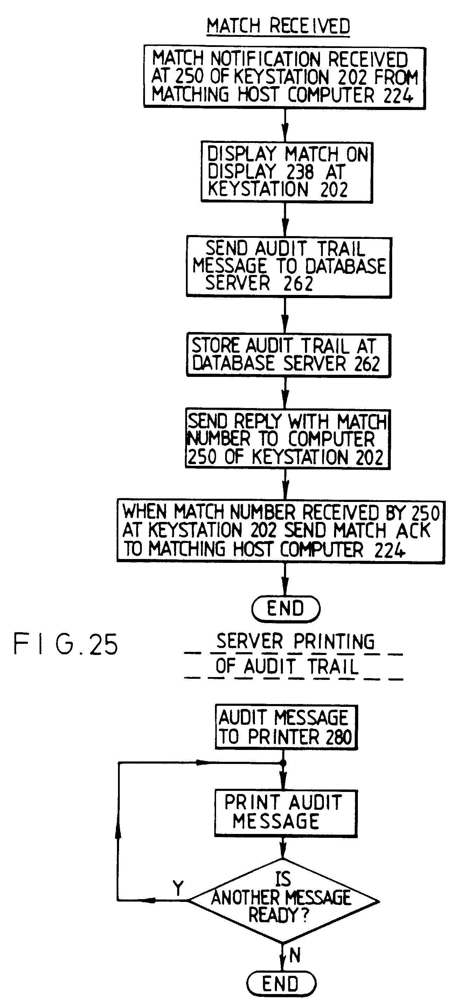

Referring now to Figs. 21 - 24, typical screen displays for the integrated screen display 238 are shown which contain trading information in connection with both matching trades and video conversational negotiated trades by the keystation 202 after it has logged on to both the matching communication network 220 and the conversation communication network 218. Fig. 21 illustrates the presence of both conversational trading data and matching trading data on the integrated screen display 238. Fig. 22 illustrates the same integrated screen display 238 when the YOURS key on the keyboard 240 of Fig. 15 has been depressed and the YOURS dialogue box is about to be transmitted. Fig. 23 illustrates the same integrated screen display 238 when a matching trade has been automatically executed and a match notification has been provided from the matching host computer 224 to the integrated terminal controller 214 associated with the keystation 202. The logic flow diagram illustrating the operation of the integrated terminal controller 214 in response to such a match notification is shown in Fig. 25 to be described in greater detail hereinafter. Fig. 24 illustrates the same integrated screen display 238 with, this time, a conversational negotiated trade having been completed as shown on the screen and in the conversation analysis area 266.

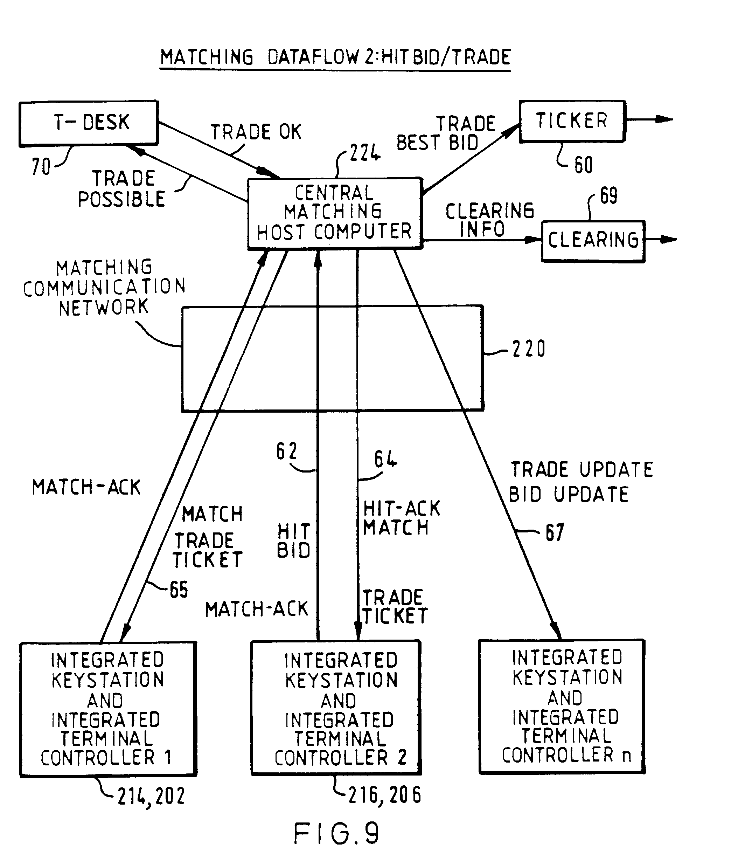

The logic flow diagram of Fig. 25 may be accomplished by conventional programming of the integrated terminal controller 214. When the match acknowledgment, to be described in greater detail with reference to Fig. 9 and EP-A-90305753 is received from the matching host computer 224, the match is displayed on the integrated screen display 238 which was a party to the matching transaction. In addition, an audit trail message is sent to the database server 262 which forms part of the conversation server 252 of the integrated terminal contorller 214 and the audit trail is stored at the database server 262. A reply with the match number is sent to the keystation and when the match number is received by the keystation 202 a match acknowledgement, termed MATCH ACK, is sent to the matching host computer 224. As further shown and preferred in Fig. 25, the database server 262 may also be preferably connected to the audit trail printer 280 for printing of audit messages. The procedure for printing such audit trail messages is also illustrated in the logic flow diagram of Fig. 25.

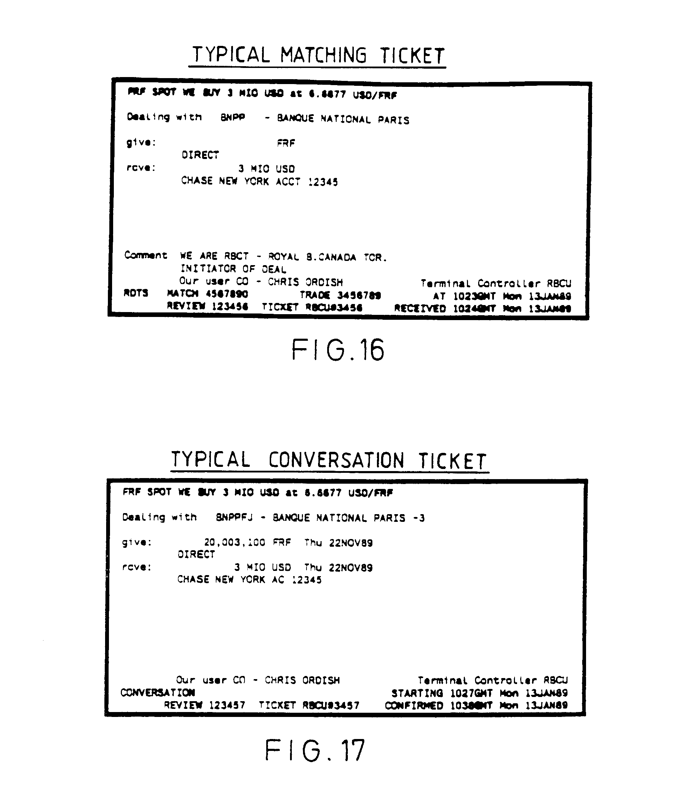

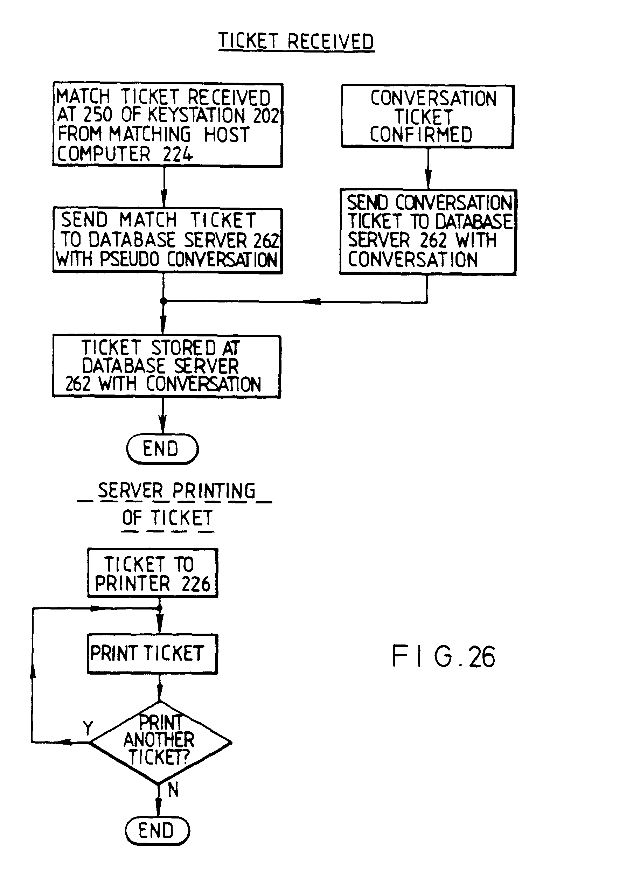

Fig. 26 is a logic flow diagram of the operation of the integrated terminal controller 214 in response to receipt of a matching ticket or conversation ticket at the completion of an automatic matching trade or video conversation negotiated trade, respectively, and may, of course also be implemented by conventional programming of the integrated terminal controller 214. When a match ticket is received at the integrated keystation 202 from the matching host computer 224, the match ticket is sent to the database server 262 contained in the conversation server 252 of the integrated terminal controller 214 in the form of what is termed a pseudo conversation, with a typical matching ticket corresponding to such pseudo conversation being illustrated in Fig. 16. This match ticket is then stored at the database server 262 and can be accessed to support review of displays on the integrated screen display 238 via the terminal computer 250 or to support retrieval of tickets over the ticket output feed 234 to the back office computer. Similarly, when a conversation ticket is confirmed at the completion of a video conversational negotiated trade, the conversation ticket, which may be in the form shown by way of example in Fig. 17, is sent to the database server 262 contained in the conversation server 252 of the integrated terminal controller 214 along with the conversation, the ticket is then stored at the database server 262 with the conversation and, like the matching ticket, may be accessed to support review of displays on the integrated screen display 238 via the terminal computer 250 and to support retrieval of tickets over the ticket output feed 234. Fig. 26 also illustrates the operation of the printing of a ticket, either a match ticket or a conversation ticket, by the ticket printer 226 utilizing the ticket data stored at the database server 262.

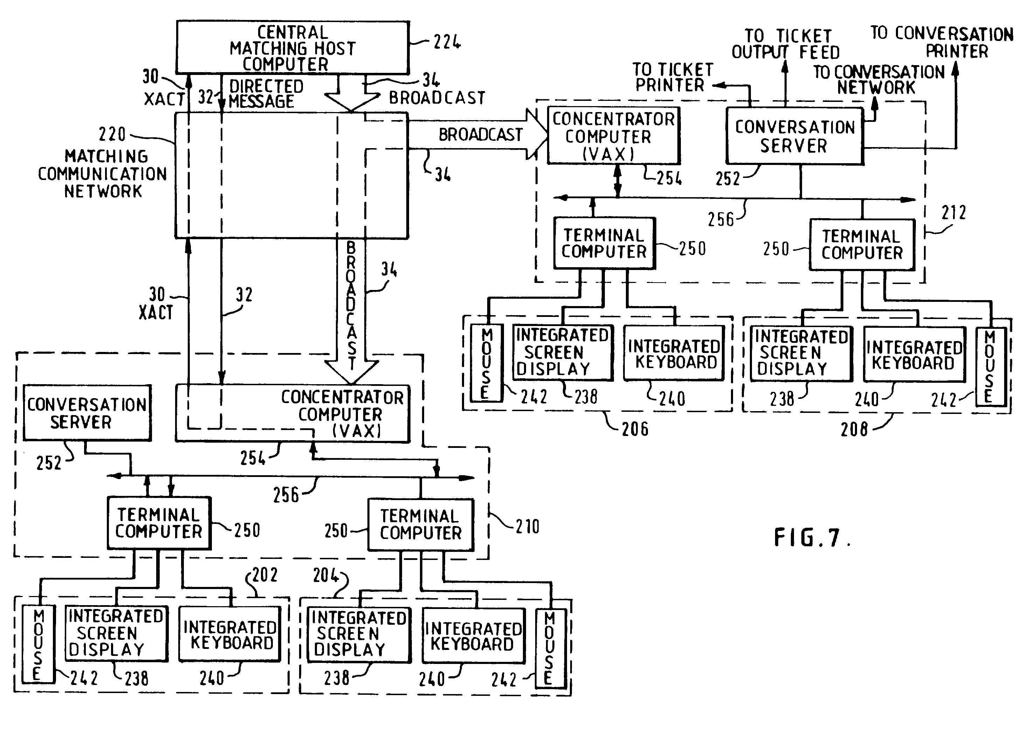

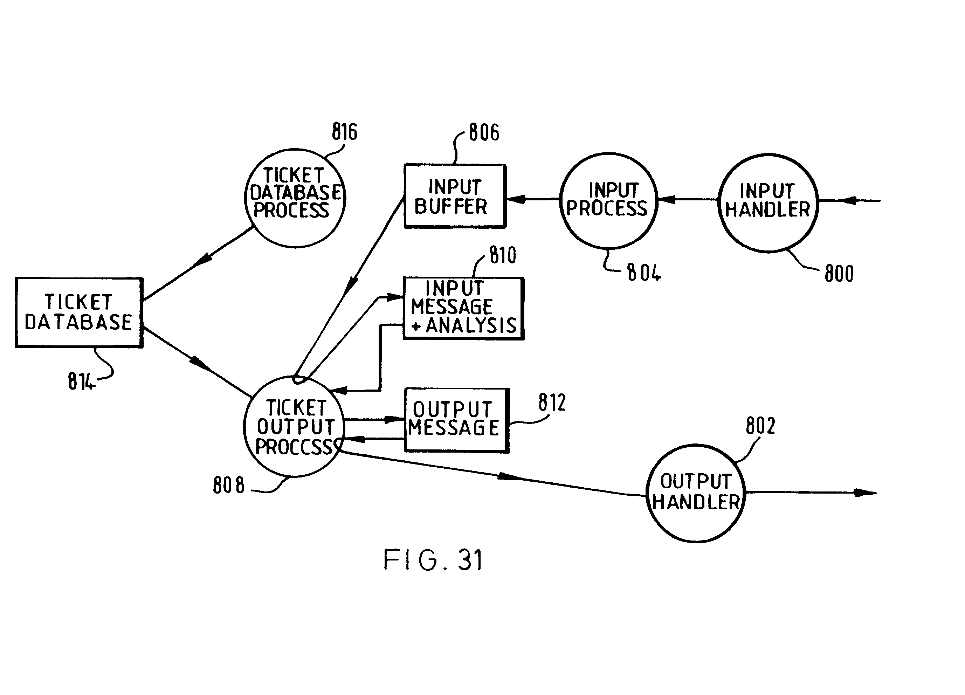

Apart from the differences described above with respect to the employment of the integrated terminal controller 214 and integrated keystation 202 so as to enable the integration of automatic matching trades and video conversational negotiated trades in the system 200, the function and operation of the various components of the system 200 relating to the conversation communication network 218 and matching communication network 220 are preferably the same as described in the respective aforementioned patents and EP and GB specifications which relate to these functions. However, for purposes of clarity, certain portions of these patent applications shall be repeated herein with respect to Figs. 3 and 4 relating to video conversational negotiated trades; Figs. 7-9 and 30 relating to automatic matching trades; and Figs. 31-34 relating to the ticket generation scheme for providing the ticket output feed via path 234 or 236.

Referring now to Figs. 3 and 4, as previously mentioned, the integrated trading system 200, provides conversation analysis with respect to the video conversational negotiated trades effected by the system 200, with this conversation analysis being summarized in area 266 of the integrated screen display 238. This analysis is preferably accomplished in the same manner as described in the aforementioned GB-A-2,226,217, in which context sensitive prompts are employed, with the conversation analysis software driving the analysis driven prompts and letting the user know in real time where the user is in the conversation that is going on between counterparties, such as foreign exchange traders, so that the appropriate prompt selection menu may be employed based on the analysis of the key points in the conversation as it proceeds in real time. This real time conversation analysis, as described in GB-A-2,226,217, also enables the preparation of Dealing or conversation tickets in real time while the deal is being arranged through the use of artificial intelligence techniques to analyze the conversation dialog and generate the ticket. Thus, as described in GB-A-2,226,217, this is accomplished in an expert type of system. The context sensitive or analysis driven prompts are preferably employed to speed up the dealer input in connection with video conversational negotiated trades in system 200 of the present invention since time is generally of the essence, such as in foreign exchange dealings. Of course, the system 200 need not be limited to foreign exchange dealing and may be used in connection with any type of video communication where rapid input of conversation information is desired. Of course, as is also described in GB-A-2,226,217, the system may be employed for data capture of offline deals as well. Because of this conversation analysis, the system 200, is capable of generating error messages to the user to alert the user if an inconsistency is detected in the conversation being analyzed in connection with a video conversational negotiated trade, such as if the value date is inproper or the range of prices is inproper, by way of example. As described in GB-A-2,226,217, apart from the conversation analysis driven prompts and associated features, the system is substantially similar to other conversational video systems developed by the assignee herein and described in the aforementioned GB-A-2,227,625. In this regard, the conversation communication network 218 is preferably basically the same type of communication network as illustrated in Fig. 13J, by way of example, of US-A-4,525,779 and the same reference numerals have been used in Fig. 4 as are used in US-A-4,525,779 for like functioning components such as for the concentrators 48 and 110, and for the nodes 44 and 42, but with the host computer given reference number 38 in Fig. 13J, of US-A-4,525,779, and with the storage device having been given reference numeral 205 in the example of Fig. 4. The London Taker in Fig. 4 is assumed to be the integrated terminal controller 216 at client site 212 and the New York Maker is assumed to be the integrated terminal controller 214 at client site 210. Of course, other packet switching communication networks could be employed for the conversation communication networks 218 in place of the network illustrated in Fig. 4. The terminal controller shown in Fig. 13J of US-A-4,525,779 is replaced by the integrated terminal controller 214 or 216 in the system of Fig. 1, with this integrated terminal controller preferably including a conversation analyzing terminal controller portion 214a, such as illustrated in Fig. 3, which enables real time conversation analysis of the video conversations between, for example, the New York Maker at client site 210 and the London taker at client site 212, and the provision of context sensitive analysis driven prompts. In this regard, and as described in the aforementioned GA-2,227,625, conversation tickets may be printed based on real time conversation analysis. In addition, as was also previously mentioned, the integrated keystations 202, 204, 206, 208 preferably also have a conventional mouse 242, such as the mouse described in the aforementioned Gb-A-2,227,625, such as for providing the fast contact features described therein and illustrated in Figs. 35-36 which correspond to Figs. 11-12 of GB-A-2,227,625. If these features are not desired, the mouse 242 may be omitted. Moreover, it should be noted, that both parties to a conversation need not have an integrated terminal controller 214, 216 containing a conversation analyzing terminal controller portion 214a, in that the analysis server 264 may be omitted, however, the party will then not have the benefit of real time conversation analysis to provide context sensitive or analysis driven prompts or automatic ticket generation or inconsistency notification based on such real time conversation analysis.

With respect to the conversation anaylzing terminal controller portion 214a illustrated in Fig. 3, the line server 260, database server 262 and conversation analysis server 264 are all preferably 80386 computers, such as a COMPAQ 80386 based computer. In addition, as was previously mentioned, the terminal computers 250 are also preferably 80386 based computers, each of which provides outputs to its associated integrated screen display 238, integrated keyboard 240, and mouse 242. The previously mentioned local area network 256 further permits communication between appropriate ones of the various computers 260, 262, 252 and 250 in accomplishing the conversation analysis, context sensitive prompts, inconsistency alert, and automatic ticket generation functions of the system 200. The line server 260 preferably serves as an interface between the terminal computers 250 and the appropriate concentrator 48 or 110 in the conversation communication network 218. The functions of the database server 262 have already been described with respect to the integrated terminal controller 214. As for the conversation analysis server 264, this server 264 preferably stores the conversation analysis software, such as the software described in detail in the aforementioned GB-A-2,227,625 and analyzes the conversation in real time and provides the desired context sensitive or analysis driven prompts to the Maker or Taker's screen 238, depending on whom the conversation analyzing terminal controller portion 214a is associated with at the time, provides conversation tickets to the database server 262 associated with it, and alerts the user to inconsistencies in the conversation by providing such alerts to the integrated screen display 238. Of course, although in the example of Fig. 3, separate servers 260, 262 and 264 are shown as comprising the conversation server 252 of the integrated terminal controller 214, these servers can be combined into a single computer, if desired, with each keystation 202, 204, 206, 208 still being supported by a dedicated terminal computer 250 and with, as previously mentioned, these keystation terminal computers 250 being linked to the servers 260, 262, 264 by the conventional local area network 256. Preferably, communication over this local area network 256 uses a virtual connection such as provided by the MS-NET standard variant. In addition, preferably all of the data about each conversation in progress, such as up to 24 such conversations for a given terminal controller 214, by way of example, is held in a global array with each element in this array pointing to a structure of type CONVDATA in accordance with the software illustrated, by way of example, in the aforementioned GB-A-2,227,625. This is a type which holds the various network handles associated with the conversation, the text buffer for the conversation, and so on. It also preferably includes an element identified as SAVEDDATA of type ANALYSISDATA, which is used to store the state of the conversation analysis. The conversation analysis is driven by the receipt of packets of text from the various keystations 202, 204, 206, 208 comprising the subscriber population of the conversation communication network 218. These successive chunks of text arrive in ANALYSE TEXT PACKETS which are directed to the correct procedure by the environment, which has been informed of the destination of the input messages by a call to NetRegisterReply in the procedure Ov-main in section caserver.c in the software described in the aforementioned GB-A-2,227,625. The incoming packets of text are directed to the procedure fn ReplyAnalysisMessages in the section camesage.c. When an ANALYSE TEXT packet is received for a conversation, (Current Conv) is set to point to the CONVDATA structure for the appropriate conversation, and the saved analysis state and ticket are preferably copied into the working areas pointed to by the globals (Ticket) and (Analysis Data). Then the procedure ReplyAnalyzeText in the section camesage.c of the software described in the aforementioned GB-A-2,227,625 is called to check the request. If appropriate, the analysis is initialized. This happens when text is deleted, for example, by an interrupt. Any new text is added to the conversation and the C library procedure setjump of the aforementioned software is called to store the current C context for the longjump return from parsing. This call to setjump returns zero, and then the parsing routine parse of the aforementioned software is preferably called to analyze the conversation from the last saved state. When the parsing is terminated by reaching the end of the text currently held, the longjump call returns to the point at which setjump was called with a non zero reply, and the analysis is wrapped up by notifying the keystation 202, by way of example, of any change to the analysis. Preferably, the conversation analysis, such as exemplified by the software described in the aforementioned GB-A-2,227,625, always starts on the parse procedure.

It should be noted, as described in the aforementioned GB-A-2,227,625, that preferably conversation analysis is performed on words or groups of symbols which are extracted by nextsym in section read.c of the conversation analysis software listing described in the aforementioned GB-A-2,227,625. Thus, until the conclusion of a stage of analysis, the symbols found are preferably stored in a buffer so that the analysis can backtrack if the current hypothesis proves incorrect. if a reanalysis is in progress, and there is such a queue of extracted symbols, nextsym preferably selects the next item in the queue. Otherwise, nextsym preferably reads a symbol from the text using the routine readsym described in the aforementioned software, which procedure preferably obtains characters from the text buffer using the routine readch. At this stage, fully replaceable synonyms, such as PLEASE and PLS, are merged to a single symbol code, held under the identifier (symbol). Other words are preferably allocated to a symbol such as S currency and individually identified by a number held in (symval). In the case of a currency identifier, this preferably identifies the actual currency, assuming that the conversation is being employed for foreign exchange. In addition, as was previously mentioned, the preferred conversation analysis software-described in the aforementioned GB-A-2,227,625 includes an error detection procedure which checks the deals as they occur in real time, reporting erroneous or suspect conditions to the user based on analysis of the conversation, with the error messages preferably being placed below the insert line in the integrated screen display 238 and the suspect flag data being highlighted in the summary analysis display area 266 on the integrated screen display 238 so as to provide an alert. It should be noted that in employing the conversation analysis function in the system 200 the general display area 270 in the integrated screen display 238 may be used to display additional financial information, such as a REUTER MONITOR page, prompt menus, analysis of the conversations, etc, with the analysis of the conversations normally preferably replacing the REUTER MONITOR display. This area 270, may also be used for prompts and expanded analyses. With respect to the starting of conversations in the integrated system 200, such conversations can basically be started in three ways; namely, the user can contact another dealer, the user can accept the call from another dealer, or the user can enter the complete deal, using the CAPTURE function, as an offline deal. The particular menus displayed, preferably depend initially on how the conversation is started, with the person making the contact normally being referred to as the Market Taker and the person accepting the contact normally being referred to as the Market Maker.

With respect to the printing of conversation tickets, assuming conversation analysis is employed in the system 200, the conversation tickets are preferably created in the system 200 as the system extracts information by analyzing conversations, with the display of the ticket being generated appearing on the integrated screen display 238. Preferably, only one analysis can be associated with one conversation and, after a user confirms the analysis with respect to a current conversation, a ticket can be printed on the ticket printer 226 depending on whether it is the Market Maker or the Market Taker, respectively, when the conversation is next terminated or printed. Preferably, the ticket printer 226 has the same characteristics as the conversation printer 230; namely, it accepts serial data and it prints on continuous paper. As a conversation takes place, the associated conversation analysis area on the integrated screen display 238 preferably shows a summary of the analysis information which, if desired, can become a fully expanded version of a current analysis which is then displayed in the general display area 270. When the conversation is terminated and saved, preferably the analysis is saved with it. Preferably, conversations and analyses are saved and deleted only as more storage is required. Before conversation analysis can be confirmed, however, preferably it must contain at least the following information about the deal: the deal type, the deal direction, the currency or currencies, the amount, the rate or rates, and the value date. Thereafter, the user can confirm the conversation analysis by pressing the CONFIRM key on the keyboard 240. Once an analysis has been set into the confirming mode, the next time the conversation is ended on the dealer's screen 238, a ticket is preferably printed and, thereafter, the conversation cannot be edited any further. If the analysis has not been confirmed, it can be marked as cancelled or wrong at any time during a real or offline conversation or when wrapping up a conversation by pressing the CANCEL or WRONG keys on the keyboard 240. Thus, in order to generate a ticket on the ticket printer 226 associated with a video conversational negotiated trade, the conversation being analyzed is set to the CONFIRMING state which ends the analysis.

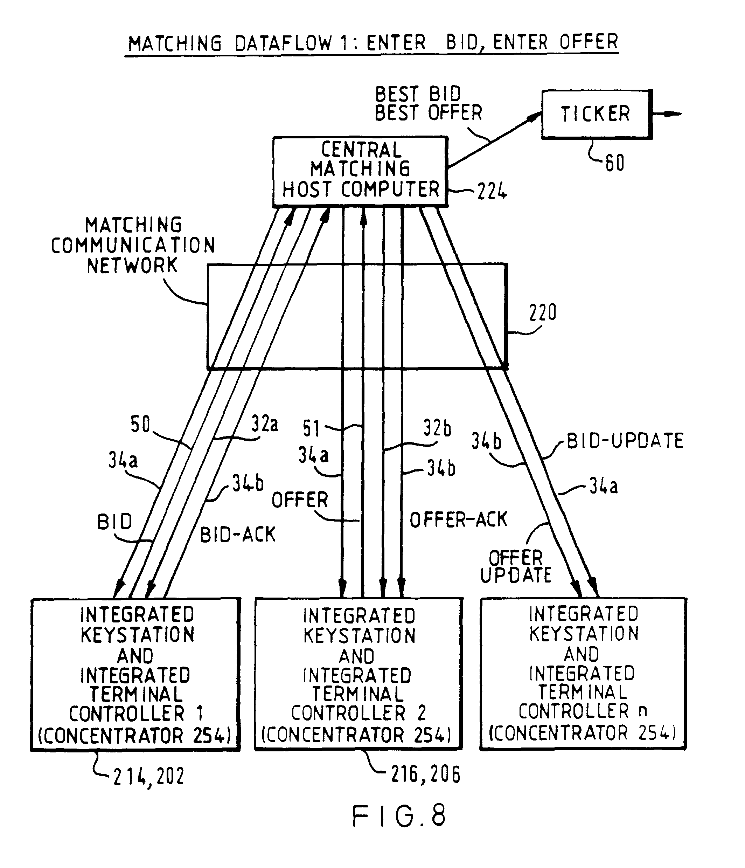

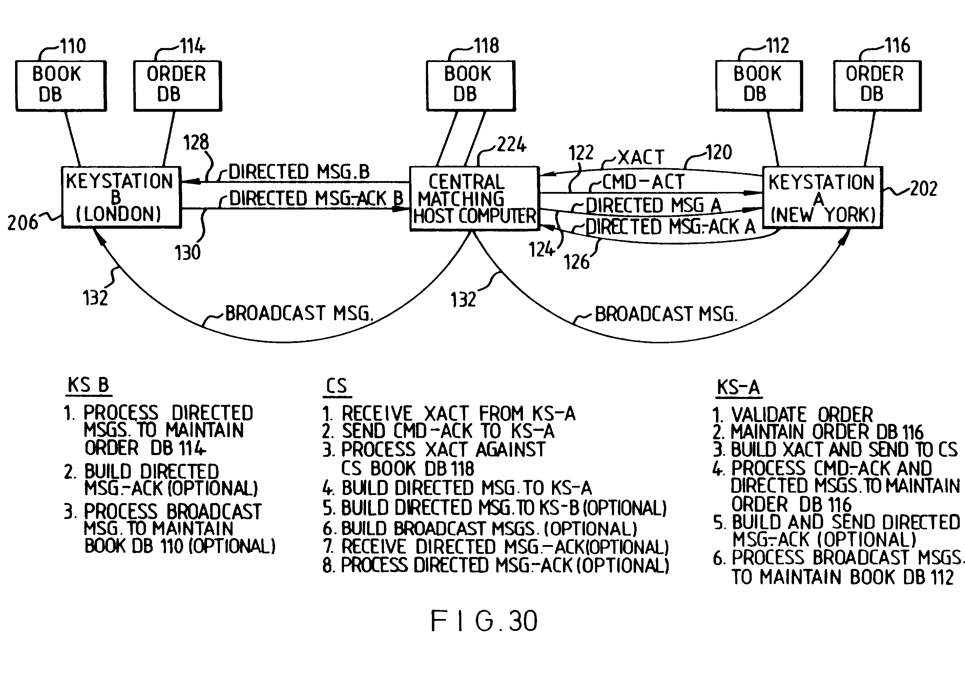

Although a more detailed description is included in EP and GB specifications, particularly EP-A-90305753, the automatic matching trade component will be briefly described with reference to Figs. 7-9 and 30. In this regard, Fig. 7 corresponds to Fig. 1 of EP-A-90305753, with the matching communication network 220 corresponding to reference numeral 22 in Fig. 1 of this publication, and with the central matching host computer 224 corresponding to reference numeral 20 in Fig. 1 of this publication. In addition, the client sites in Fig. 7 have been given reference numerals 210 and 212 as opposed to the reference numerals 26a and 26b employed in Fig. 1 of this publication, since these client sites 210, 212 contain the presently preferred integrated terminal controllers 214, 216, and with the keystations 24a and 24b of Fig. 1 of this publication being replaced by the presently preferred integrated keystations 202, 204, 206, 208. Similarly, Fig. 8 corresponds to Fig. 2 of this publication with the same exceptions, and Fig. 9 corresponds to Fig. 3 of this publication with the same exceptions. Similarly, Fig. 30 corresponds to Fig. 6 of this publication with the same exceptions with respect to the integrated keystations 202 and 206 being substituted for keystations 24a and 24b, and with the reference numeral 224 being used for the central matching host computer 20 employed in Fig. 6 of this publication. As shown and preferred Fig. 8, the matching component for effecting automatic matching trades in the integrated trading system 200 is shown in which trading is effected through anonymous matching as opposed to through the previously described video conversational negotiated trades. Thus, in connection with the distributed matching communication network 220 of the system 200, the matching host computer 224 serves as a computerised exchange in which its central role 15 to identify a buyer and seller who are willing to trade with one another based on specified criteria, such as price, quantity and credit. When such a matching event occurs, assuming the integrated keystation 202 has logged on to the matching communication network 220 in the manner previously described with reference to Figs. 18 - 20, preferably the buyer and seller are informed of the trade and sufficient information is then provided to them through the respective integrated terminal controllers 214 and 216 in order to complete the physical clearing of the transaction. As described in the aforementioned EP and GB specifications, in order to support this central function, various support functions are required, one of which is preferably the maintenance of summary market information on the participant's keystation integrated display 238 at the various client sites 210, 212. Preferably, at all times, those keystations 202, 204, 206 and 208 which form part of the matching communication network 220 will display the best inside price for every instrument traded through that network 220. Although all four keystations 202, 204, 206, 208 are represented as being part of the matching communication network 220, as well as being part of the conversation communication network 218, this need not be the case. The best inside price is preferably defined to be the highest value bid and the lowest value offer in the network 220. Preferably, the prices are displayed together on the integrated screen display 238 with the quantity bid or offered at the specified price so that the trader at the respective integrated keystation 202, 204, 206 or 208 can observe the market activity. By observing the market activity, the trader can decide whether to enter a bid, or enter an offer into the market in an effort to complete a matching transaction, as opposed to the manner of openly negotiating a trade by exchanging discretionary messages through the conversation communication network 218 to complete a video conversational negotiated trade. Thus, with respect to the matching communication network 220, the system 200 essentially maintains a book of bids and offers in the matching host computer 224 and a user or keystation 202, 206, by way of example, and a client site, such as client sites 210 and 212, respectively, interacts with the book by submitting bid, offer, hit, or take transactions, such as illustrated in Fig. 8. The order entry function is preferably conventionally achieved through data entry using the integrated keyboard 240, the mouse 242, or any other conventional data entry tool. The matching host computer 224 validates the transaction request, processes the bid, or the hit or take, according to the rules of the market, and attempts to find matches between this new entry and the other bids or offers posted in the matching communication network 220 book. If a match is found, then the trade is automatically executed, the participants to the trade are informed, all databases and trader screens 238 are updated as to the quantities traded and the quantities remaining and, if desired, a clearing agency may be informed as to the details of the trade so that payment and exchanges may be completed. If on the other hand, a match can not be found, then the matching communication network 220 preferably either disposes of the entry for hit or take or keeps the entry for bid or offer for later processing. Preferably, in all cases, transactions are processed to completion according to certain rules and the various client sites 210, 212 preferably receive real time updates of the new status of the trading instruments, assuming that they are members of the matching communication network 220. Thus, as shown and preferred in Fig. 8, the client site systems 210, 212, only two of which are shown by way of example in Fig. 8, when the associated keystations 202, 204, 206, 208 have selected the matching trade option, submit transactions, such as represented by reference numeral 30 in Fig. 7, to the central matching host 224 via the matching communication network 222.

As will be explained in greater detail hereinafter with reference to Fig. 30, the submission of a transaction 30 from a client site 210 or 212 to the central matching host computer 224 will preferably result in one or more messages, represented by reference numeral 32, going directly back as a directed message to the client site, 210 in this example, which initiated the transaction message. Another effect of the transaction message 30 being sent to the central matching host computer 224 is that for certain sorts of transactions, a broadcast message 34 is generated by the central matching host computer 224 which is then delivered to all client sites 210, 212 attached to the central matching host computer 224 via the matching communication network 222. Thus, the directed response or the directed message 32 only goes back to the particular client site 210 and, more particularly, the particular integrated keystation, 202 by way of example, at that client site 210 which initiated the transaction message, whereas the broadcast message, 34 goes to all client sites 210, 212 and all the various integrated keystations 202, 204, 206, 208 associated at those client sites 210, 212 which are part of the matching communication network 220. As was previously mentioned, by way of example, in Fig. 7, a typical client site 210 is shown as having keystations 202 and 204, although the number of keystations available at a client site is merely limited by the capacity of the system and the desired processing time. With respect to the distribution of the functionality in connection with the matching communication network 220 of the integrated trading system 200, the matching communication network 222 preferably does not really play a part in that it is transparent to transactional information. By this what is meant is that when the transactional information leaves the client site 210, for example, it could be, if desired, encrypted or garbled in a way that the only other entity which could understand it would be the central matching host computer 224 and that would be irrelevant to the function of the matching communication network 222 since the network does not look at the messages, does not process the messages, and merely transfers these messages to the appropriate parts of the matching communication network 220, such as to the matching host computer 224. In this regard, the network 220 is functioning similar to a paired cable in that it is there to pass the information back and forth. Of course, the network 220 has various other-communication functions which, however, for purposes of understanding the matching component of the integrated system 200, are unnecessary to go into. Suffice it to say that preferably the matching communication network 220 uses a protocol which can be termed hierarchal fan-out in which one node transmits to multiple nodes which in turn transmit to multiple other nodes. Thus, matching communication network 220 helps implement broadcast capabilities integrated with a message switching network to achieve full tolerance in broadcast distribution. It should be noted, when a match occurs, the central matching host computer 224 will preferably send directed messages or responses to all of those parties in the system 200 that were involved in the match, so that, in some instances 2,3 or more client sites 210, 212 may be involved in receiving the directed message. However, this still differs from the broadcast message which is sent to all client sites irrespective of their involvement in a particular match.

Referring now to Fig. 8, this figure illustrates a typical data flow in the integrated system 200, for the entry of a bid or entry of an offer, with the matching communication network 220, as was previously mentioned, being transparent to transactional information. Integrated keystation 202, by way of example, submits a bid transaction to the central matching host computer 224 through the matching communication network 220, via the terminal computer 250 and the concentrator computer 254. The directed message or directed response 32 which it receives back from the central matching host computer 224 is termed a bid acknowledgment or BID-ACK. This acknowledgment is a command acknowledgment which is preferably followed by an entry position message and is, as previously mentioned, directed directly back to the keystation 202 via the concentrator computer 254, the local area network 256, and the terminal computer 250. In addition, as shown and preferred in Fig. 8, a bid update message is broadcast by the central matching host computer 224 to all keystations 202, 204, 206, 208 in the system 200 which have logged on to the matching communication network 220, such as represented by reference numeral 34a in Fig. 8. This broadcast message 34a preferably occurs if this new bid 32a was a new best bid in the system 200 with respect to the matching component, or was an additional quantity being bid at the best price in the system 200 with respect to the matching component. Thus, if this new bid 32a is at the highest price or better or higher, then it will result in a bid update broadcast message 34a going out throughout the system 200 to all keystations which have logged on to the matching communication network 220. In addition, as also shown by way of example in Fig. 8, if it is desired to disseminate an external ticker 60, then the ticker information 60 will also be provided of the best bid or best offer. Preferably, the same procedure is followed with respect to entry of an offer with the messages, in this instance, being identified as offer, given reference numeral 51, offer acknowledgment or OFFER-ACK, given reference number 32b, and the broadcast message for offer update, being given reference numeral 34b.

Referring now to Fig. 9, the data flow in the integrated system 200, is illustrated with respect to a situation in which there was a hit bid resulting in a trade. In this situation, there is substantially more activity than the situation previously described with reference to Fig. 8. Thus, as shown and preferred in Fig. 9, if the integrated keystation 206 submits a transaction called "hit bid", represented by reference numeral 62, to the central matching host computer 224 via the matching communication network 220, a hit acknowledgment or HIT/ACK, represented by reference numeral 64, is provided back to keystation 206 as a directed message. At that point, the central matching host computer 224 will recognize that a match is possible because the "hit bid" message says that keystation 206 is willing to trade at the bid price. Assuming that credit is OK and does not play a role beyond that in this transaction, the central matching host computer 224 determines that a match is possible but, preferably, before committing to the match, it may get involved in a risk limiting protocol using a transaction desk 70, as described in the aforementioned EP and GB specifications which determines whether the trade is possible, and if so, acknowledges this to the central matching host computer 224. Assuming that a trade is possible, then a match occurs. At that point several messages are generated from the central matching host computer 224 through the matching communication network 220. One of these messages is termed the match message, given reference numeral 65, which is a directed message that goes to the bidder, which in this instance is keystation 206, and to the keystation 202, which originally owned the bid. Thus, in this instance directed messages go to more than one integrated keystation 202, 206 logged on to the matching communication network 220. Preferably, every match must be acknowledged so there is a match acknowledgment message, MATCH-ACK which comes back from the buyer and seller keystations 202 and 206 and is used to determine that the match was in fact received correctly and that the deal can be considered complete at that point. The response of the integrated terminal controller 214, 216 to such a match notification has been previously discussed with reference to Fig. 25 which represents software resident in the various terminal computers 250 associated with the keystations and in the integrated terminal controllers 214, 216, themselves, in the respective data servers 262, as a result of conventional programming. In addition, a broadcast message is generated that a trade has occurred which trade update message, given reference numeral 67, may possibly cause a new best bid to occur or could affect the quantity or price at the top of the book. Again, if the trades and best bids go into the ticker 60, then this information is provided to the ticker as well. Similarly, if clearing information is provided to a clearing house, this too occurs as represented by reference numeral 69. In addition, as shown and preferred , trade tickets may also be generated, such as previously referred to with reference to Fig. 26. Thus, trade ticket information is also preferably provided to the participating integrated keystations 202, 206 in the above example, so that the trade tickets can be generated with respect to the matching trades.

It should be noted that the concentrator computer 254, which interfaces with the matching communication network 220, preferably always communicates with the associated conversation server 252 containing the database server 262 which controls the ticket generation, via the keystation terminal computer 250. Thus, the concentrator computer 254 and the conversation server 252 are tied together in the integrated terminal controller 214, 216 through the local area network 256 and the associated keystation terminal computers 250. Consequently, the software associated with the "ticket received" function illustrated in Fig. 26, which may be accomplished by conventional programming, is resident in the terminal computers 250 associated with the individual keystations and in the data server 262 portion of the conversation server 252 in the integrated terminal controller 214, 216.

With respect to the details of the various books employed in the distributed matching component of the integrated trading system 200, these details are described in the aforementioned EP and GB specifications. Suffice it to say that the central matching host computer 224 maintains a host book database comprising all of the active bids and offers in the integrated trading system 200 which have been provided by keystations which have logged on to the matching communication network 220 and that each of the respective integrated keystations logged on to the matching communication network 220 has an associated local data base keystation book which comprises a subset of the host book, with the content of each of the keystation books having an associated display depth range controllable by the central matching host computer 224 and being updatable by transaction update broadcast messages received from the matching host computer 224 through the matching communication network 220. In this regard, reference is made to Fig. 30 which illustrates the two collections of information which are being maintained at the client sites 210, 212 which have logged on to the matching communication network 220. As shown by way of example in Fig. 30, one of these collections of information is the book for each instrument which is maintained at the keystation sites, 202 and 206, in the above example, and have been given reference numerals 112 and 110 respectively in Fig. 30. Another book maintained at each site is a local entry data base or order book which has been given reference numerals 116 and 114, respectively, in Fig. 30. As previously mentioned, there is also the host or system book data base associated with the central matching host computer 224 which has been given reference numeral 118 in Fig. 30. Each time a client site 210 or 212, by way of example, starts up as an integrated keystation logging on to the matching communication network 220, such as by using the log on software and procedure illustrated by way of example in Figs. 18 - 20 and in Table A annexed hereto as an Appendix, which is written in C language for use with an 80386 computer, and which is resident in the terminal computer 250 of the integrated keystation, the integrated keystation which is logging on to the system 200 is preferably initially empty and requests download of the currently active books from the matching host computer 224. Preferably, separate books are maintained for each trading instrument, and each of these books is maintained at a given display depth. In this regard, it should be noted that an update broadcast message is preferably only broadcast when the price information is inside the assigned display depth that has been assigned by the matching host computer 224. With respect to the local entry database or order books 114, 116, these order books 114, 116 are preferably updated by directed messages from the matching host computer 224 and/or record the orders of the particular integrated keystation 202, 206, by way of example, which had been sent to the matching host computer 224 through the matching communication network 220. In this regard, these order books 114, 116 are preferably kept current so that there is a listing only of orders which are still present in the central matching host computer 224 from the respective integrated keystations 202 or 204, by way of example.

This order database 114 and 116 gets modified, such as through the removal of data, due to various occurrences, such as when a complete match has occurred for a given order and an entry remove message is provided, or if it is a partial match you may get an entry message that tells you that only a partial match has been done against that order. The match notification, which was previously referred to, preferably refers to a particular order that is contained in the order database 114 or 116 and indicates what quantity or portion of the order has been matched. If all of the order has been matched, the entire order is then preferably deleted from the respective order database 114 or 116. By way of example, if a bid were put in for ten million yen at a price of 127 and the display was enabled, that is the display depth was set to something greater than or equal to one, then the central matching host computer 224 would preferably construct a broadcast message, which is the aforementioned update broadcast message, which would inform all client sites 210,212 that a new bid had been added to the Yen book, assuming that were the instrument being traded. The update message would instruct an operation block which would say add to index one the ten million at 127. As for the other parameters in the update message, add index would equal one, type would equal bid, quote would equal 127, and quantity would equal ten million at 127. As for the other parameters in the update message, add index would equal one, type would equal bid, quote would equal 127 and quantity would equal ten million. In the above example, the transaction achieves two functions. The first function it achieves is that a bid is submitted and the matching host computer 224 responds to the integrated keystation 202 submitting the bid that the bid was accepted and that there was no ambiguity in that the bid is definitely in the system 200; the system 200, namely the matching host computer 224, has it; and the local entry database 116 has it. The other function indicates that the bid was of a certain characteristic that the rest of the "matching trading world" in the system 200 should know about, and this is accomplished as a result of the broadcast message which was generated to all of the client sites 210, 212 logged onto the matching network 220, which were then told about this in summary as opposed to being given all of the detailed information. It should be noted that, as previously mentioned, in terms of functional operation, the entry of a bid to the system is the same as entry of an offer.

In the situation when a trade occurs, this means that a matching offer is present in the system, the matching host computer 224 has accepted that matching offer, and sends back the acknowledgment command, in effect retrieving the existing book on Yen, in the above example, finds out that there is ten million yen at 127 in the book, adds to that the newly entered fifteen million at 127, and is aware that it has positioned fifteen million at 127. The matching host computer 224 then does the match up including that ten million and does the trade, taking out the existing bid, so it reduces that amount to zero million at 127 leaving over five million at 127 on the offer side. In this instance, as will be further explained with reference to Fig. 30, at least two directed messages have been sent, actually four having been transmitted to the client sites 210,212 that are involved in the trade. The seller will get an indication that his Yen bid has traded by means of a match notification and he will, thereafter, be informed who the counterparty was after the match has been made. The clearing and settlement of the trade will then preferably be the responsibility of the subscribers. The counterparty who originally transmitted the offer and entry position message saying that it had a Yen offer positioned greater than the bid will then get an entry positioned yen offer at five million at 127 and will get a match notification saying that, with respect to his offer, ten million of his original fifteen million has traded with the party who will then be identified. Lastly, the update broadcast message will be constructed and broadcast to all client sites 210, 212 logged on to the matching network 220 to update the trading book. That update message will preferably, in the above example, contain two operation blocks, one which will remove the bid information from the client book and the second which will post the new five million offer which remains on the offer side and will show that a trade took place. In addition, as was previously mentioned, if desired, ticker information will also be provided in the update message saying what traded, keeping track of the cummulative volume, the net change, the number of changes, the high limits, the low limits and so forth. It should be noted that preferably only the integrated keystation that either executed the transaction, for example keystation 202, or was involved somehow in that transaction will receive the directed message with respect thereto and not other integrated keystations, such as keystation 204, at the same client site 210, whereas with respect to broadcast messages all integrated keystations logged on to the matching network 220 at all client sites receive these messages. If desired, with respect to credit, this can be controlled on a client site by client site basis as opposed to a keystation basis. Thus, in the system 200, the matching communication network 220 has two functions, one of which is directed message delivery and the other of which is broadcast message delivery.

Referring now to Fig. 30 in greater detail, the matching communication network 220 which, as was previously mentioned, is transparent to transactional information, has been omitted for purposes of explanation of the message flow in the system in accordance with the method of the present invention. For purposes of the example of Fig. 30, integrated keystation 202 can represent any keystation which originates a transaction and integrated keystation 206 can represent any keystations which are involved as counterparties in the transaction which, as was previously mentioned can be more than one keystation at more than one location. The keystations 202 and 206 are normally remotely located from each other such as, for example, keystation 202 being at a client site 210 in New York and keystation 206 being at a client site 212 in London, which are the same locations used in the example of Fig. 4 relating to the transaction of video conversational negotiated trades, although the locations need not be the same.

In addition, the keystations 202 and 206 are remotely located from the central matching host computer 224. In order to understand the message flow illustrated in Fig. 30, we will assume that the originating keystation 202 is receiving a display of the keystation book database located at keystation 202 on its integrated screen display 238. Assuming that the operator at the integrated keystation 202 then desires to enter a bid or an offer, either of which will be termed an order, this information is input to the keystation 202 via conventional means, such as the integrated keyboard 240 or a mouse 242, by way of example. The keystation 202 then preferably validates the order and maintains its local order data base or local entry data base 116. The order, instead of being a bid or an offer, could be a hit or a take for a particular trading instrument as well since all of these various items would constitute an entry of an order. After the order has been entered, validated, and, the order data base 116 maintained, a transaction message is built and sent as a directed message to the central matching host computer 224 through the matching communication network 220. This is represented by reference numeral 120 in Fig. 30. This transaction message 120 is received by the central matching host computer 224 and contains transaction information. At this point, preferably the central matching host computer 224 sends back a directed message, termed a command acknowledgment message and given reference numeral 122, to inform integrated keystation 202 that the transaction message 120 has been received. The transaction message 120 is time-stamped by the central matching host computer 224 at this point. Preferably the display 238 of keystation 202 will indicate "please wait" until the transaction message 120 has been acknowledged. Preferably, such acknowledgment happens relatively quickly, such as in about two seconds, by way of example. The central matching host computer 224 then preferably processes the transaction message 120 against the central matching host computer 224 stored copy of the system or host book which is contained in the host book data base 118. At this point, the central matching host computer 224 preferably either adds the entry of the transaction or the order from integrated keystation 202 to the host book data base 118 or matches that entry against existing bids and offers contained in the host book data base 118. Once that processing is completed, the central matching host computer 224 is ready to generate output messages not only to the originating keystation 202, but possibly to other keystations, such as the counterparty keystations represented by 206 and, assuming that an update message is required, to all keystations which have logged on to the matching communication network 220. Thus, matching host computer 224 generates directed messages back to each of the keystations involved in the matching transaction, such as the originating keystation 202, and, assuming that there is a match, keystation 206 as the counterparty keystation, and generates the update broadcast message to all keystations logged on to the matching network 220. It should be noted that, as previously mentioned, a single transaction message 120 from keystation 202, whether it is a hit, or a take, or a bid, by way of example, could result in multiple matches. For example, if keystation 202 wants to hit the bid for a quantity of 20, it is possible that to satisfy that order more than one match could be involved such, as for example, four or five different matches, particularly, since the keystation book at keystation 202 merely displays accumulated summaries of the bids or offers.

If multiple matches occur, then, thereafter, the identity of all of the counterparties involved in the multiple matches are displayed on the integrated screen display 238 of the originating keystation 202 for settlement purposes. Thus, on any given transaction, there will always be directed messages involving the transaction originator and involving one or more counterparties or affected parties in that trade or transaction. If the market is an auction market, then it preferably has a price depth of one so that this determines how many prices the central matching host computer 224 can maintain with only one price being maintained in an auction market. When a new bid goes in which betters the existing bid in an auction market, the existing bid is actually removed and effectively cancelled in the book. Preferably, after all of the directed messages are generated to the counterparties, and the associated directed message acknowledgments, such as represented by reference numerals 124, 126, 128 and 130 in Fig. 30, the update broadcast message, represented by reference numeral 132 in Fig. 30, is sent to all keystations logged on to the matching network 220 regardless of whether or not they were involved in their particular matching transaction. It should be noted that preferably the first six steps illustrated in Fig. 30 with respect to the central matching computer 224 are all essentially asynchronous to any outside events. When the keystations 202 and 206 receive the update broadcast message, it will be processed against the local keystation book database 110, 112 and the local copy of the book will be maintained. As was previously mentioned, it should be noted that this local keystation book 110, 112 is not an exact carbon copy of the central system book 118, but rather is only a selected subset of it which comprises an accumulated summary of bids and offers within the assigned display depth. Thus, preferably, Fig. 30 illustrates a generic template for the processing of messages throughout the integrated trading system 200 in accordance with the method of the present invention in order to provide the distributed functionality of the system to keystations logged on to the matching network 220.

It should be noted that the concept of originating keystation and counterparty keystation moves around with each transaction so that for each transaction the originator may be different and may, for different transactions occurring at the same time, be an originating keystation in one instance and a counterparty keystation in another instance. in addition, there are other instances in which the keystation may merely be a bystander and not involved in the particular transaction at all. Preferably the control of the overall distributed matching system is maintained by the central matching host computer 224 which operates in accordance with a set of rules which govern how the transactions are processed. Preferably, the central matching host computer 224 processes transactions against a particular trading instrument in time order of entry into the system. In this regard it should be noted that it is not time entry of orders per se but time entry of orders related to a particular trading book or trading instrument. Thus, there would be time order entry assigned to Yen, a different time order entry consideration assigned to Deutsch Marks, and so forth if the trading instruments were foreign exchange currencies.

In Figs 31-34, which correspond to Figs. 4-6 and 8 of GB-A-2,224,141, the trading ticket output is shown. Pressign the TICKET key on the integrated keyboard 240 causes the expanded analysis display mode to be entered or stored in the data base server 262. As was previously mentioned, in this mode, the expanded analysis for the current conversation, assuming the keystation is connected to the conversation communication network 218, is displayed on the screen 238. The expanded analysis preferably shows the full contents of all the fields that can appear in the analysis except that payment instructions may, if necessary, be truncated. In the case of forward deals, preferably the information for both value dates is shown, requiring four transactions. While in expanded analysis display mode, the expanded analysis on display is preferably kept up-to-date with the conversation. Swapping between two conversations would automatically preferably swap between the two expanded analyses so that the one for the current conversation was always visible. The expanded analysis display mode preferably remains in effect until a different use of this display area on the screen 238 is requested. Preferably, if a printout of the conversation analysis is requested, the output on the conversation printer 230 is similar to that of the displayed window, although the payment instructions may be moved to a separate line if desired. With respect to printing a conversational ticket with the ticket printer 226, the format of the ticket is preferably similar to the expanded analysis such as the conversational trading ticket illustrated in Fig. 17, however the order of the information may be changed to present the more critical information first. Of course, although the creation and storage of a ticket has been described in terms of real time conversation analysis, such a system is not necessary for the generation of tickets per se which merely requires a local data base storage of trading tickets no matter how these trading tickets are dynamically created, with the data base server 262 providing such a local data base storage, by way of example, in the integrated terminal controller 214, 216 for both conversational trading tickets and match tickets, with the match tickets being stored as pseudo conversation, such as illustrated in Fig. 16, by way of example.

For purposes of better understanding the preferred ticket output feed 234, 236, the preferred ticket output protocol and process will now be described for handling the transfer of trading ticket information between the local data base server 262 and the back office computer. In this regard, with reference to U.S. Patent No. 4,745,559 incorporated by reference herein, the local data base server 262 is analogous to the local data base described in U.S. Patent No. 4,745,559, except, as will be described in greater detail hereinafter, with respect to the various differences as it relates to the presently preferred ticket output protocol and process employed in the system 200. Although, the preferred ticket output protocol preferably employed in the system 200 preferably employs field identifiers or FIDs which are analogous to the field identifiers referred to in the aforementioned U.S. Patent No. 4,745,559, the information contained therein is totally different. In place of the record identifier codes or RICs referred to in the aforementioned U.S. Patent No. 4,745,559, the ticket output protocol process preferably employs unique deal identifiers which correspond to the ticket number on the printed deal ticket as well as to the integrated terminal controller 214,216 which contains the local data base server 262 containing that record. Thus, the deal or trading ticket identifier includes the terminal controller identifier as well as a ticket number, with deals preferably being given sequential numbers in order of their confirmation. The sequence is preferably in the range of 1 - 999999, by way of example, for each terminal controller 214,216. The deal identifier preferably starts with the terminal controller identifier and a # and is followed by the sequential number, such as, for example, AAAA#123456 for deal number 123456 on terminal controller AAAA. In addition to retrieving the deal per se, the status of the data in the terminal controller system can also preferably be retrieved using the terminal controller identifier AAAA#INFO, by way of example.

Preferably, as will be described in greater detail hereinafter, the data base server 262 can supply two kinds of data to be retrieved about the deals being conducted by the keystations associated with that terminal controller 214, 216; namely information on a deal, and status information on what is stored in the data base. As will be described in greater detail hereinafter, it is the updates from the status record which are preferably looked at to see if there is a change in status indicating that a new trade has arrived, which permits rapid transfer of trading information, such as the trading tickets, without the need for continuous polling of the various terminal controllers 214,216. It should be noted that each terminal controller 214,216 keeps its own unique record o£ deals and has its own unique set of deal identifiers which are independent of the other terminal controllers 214, 216 associated with the back office computer, assuming more than one terminal controller is associated therewith, since a portion of the record identifier is the unique identification of the terminal controller 214, 216 itself. A data record associated with a terminal controller identifier or TCID, is preferably a collection of data items with each data item being assigned a unique Field Identifier Number or FID. The presently preferred ticket output protocol employed in the system 200 in accordance with the method of the present invention preferably uses the FID number to identify each data item within a message. Preferably, records in the system are grouped into classes, such as for a deposit deal, or a swap deal or a single deal, such as a spot or outright deal, with each class preferably relating to a set of FIDs called a Field List. The Field List is analogous to a template except that it relates to the format of the transmission of the data as opposed to the display per se, with the Field List defining which collection of data items will be received for that class of record. This Field List is preferably contained in the record response of the data base server 262 to the request of the back office computer for trading ticket information.

Since single deals such as spot or outright deals; swap deals; and deposit deals have certain characteristics unique from each other, unique field identifiers must preferably be provided to distinguish these types of deals in the preferred ticket output protocol.

Preferably, requests for the status of the deal or trading ticket data base contained in the local data base server 262 of a particular terminal controller 214, 216 will provide information to the back office computer on the earliest and latest deal identifiers stored at the local data base server 262, with the date and time of the trading tickets. This information would permit the back office computer to determine the range of trading tickets available for retrieval.

Preferably, all fields within the messages transmitted between the local data base server 262 and the back office computer contain ASCII characters which makes them suitable for display on a video terminal with little or no additional formatting, thus making this data feed ideal for quick implementation in a data display system, such as via the integrated screen display 238.

Fig. 31 diagrammatically illustrates the various portions of the trading ticket output system concerned with the presently preferred trading ticket output protocol of the system 200. Thus, a conventional serial line handler provided by the operating system is employed with, for convenience of explanation, the input and output being separately illustrated as the input handler 800 and the output handler 802. The input process 804 preferably extracts input bytes from the serial line via the input handler 800 and places the: in an input buffer 806. The input buffer 806 performs the checks for input packets and checksums and can also set flags to ask the ticket output process 808 to generate the control characters ACKNOWLEDGE and NO ACKNOWLEDGE at appropriate points in the output stream. The input process 804 also preferably detects these control characters, such as ACKNOWLEDGE and NO ACKNOWLEDGE, at the appropriate points in the input stream, with the occurrence of these control characters being tested for by the ticket output process 808 when it has sent a message. The ticket output process 808 is preferably scheduled regularly and has several independent tasks, the main ones of which are preferably taking confirmed bytes from the input buffer 806 and placing them in a message buffer 810, scanning the message 810 to find the next complete message if available and, when found, checking the message. If the message is faulty, an appropriate error response is sent to the output message buffer 812. If, however, the message is valid, appropriate flags are set to request the required action. Preferably, no further messages are then handled by the ticket output process 808 until the action is complete. If a ticket or status report is requested by an input message, then the ticket output process 808 preferably gathers the data from the ticket data base 814 and places it in the defined format, determined by the Field List, in the output message buffer 812. When a message has been assembled in the output message buffer 812, the ticket output process 808 preferably adds the appropriate control bytes and transfers it to the output handler 802, passing as many characters as the output handler 802 can accept at a time until the whole message has been transferred to the back office computer from the local data base server 262. The ticket data-base process 814 is preferably modified to support updates of the status data in the ticket output protocol. The addition is preferably required when the data base is modified by the addition of a new trading ticket or the removal of an old ticket. In these cases, the ticket data base process 816 preferably sets a flag so that the update will be created by the ticket output process 808, with the flag being cleared, as appropriate, by the ticket output process 808. The ticket data-base process 816 is preferably designed so that it adds a ticket to the end of the data base 814 and obtains space as necessary by removing the earliest tickets from the beginning of the data base 814. Either of those changes alters the status of the data base 814 so that when there is a status check by the back office computer, the back office computer is, thus, advised of the addition of a trading ticket by detecting the change in status. This is indicated to the ticket output process 808 by setting out a flag which is cleared, when appropriate, by the ticket output process 808.

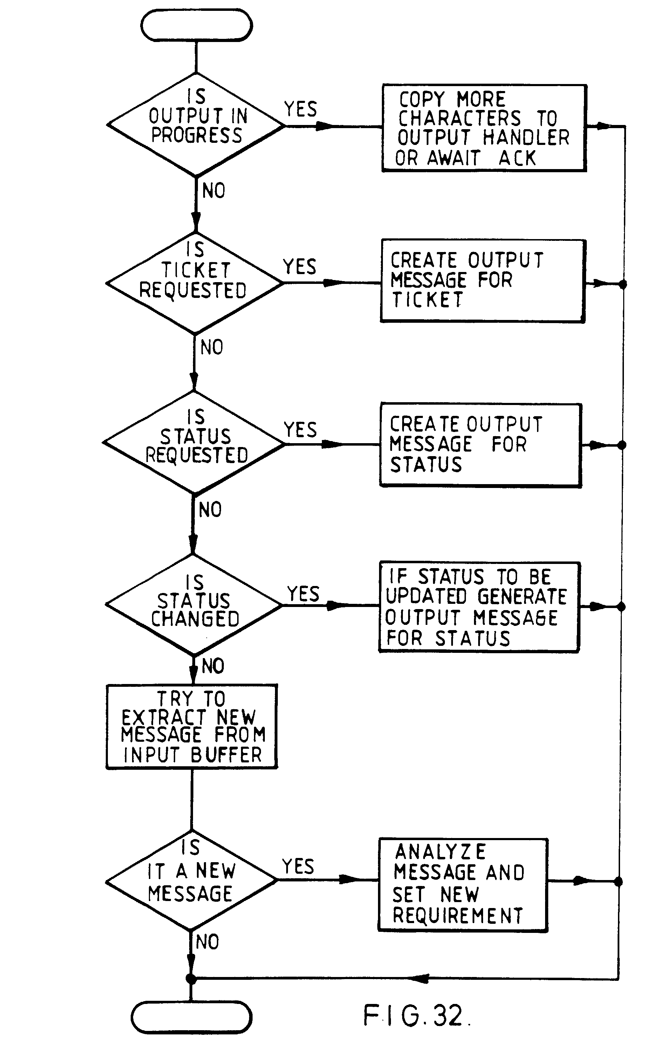

Fig. 32 further illustrates the presently preferred operation of the ticket output process 808 which, as can be seen, is entered at frequent intervals. The logic preferably gives priority to responses to requests, and handles one request at a time. A request preferably remains in the input message and analysis stage 810 until it has been answered. When any message has been created for output, preferably the ticket output process 808 is dedicated to the output of the message until it has been ACKNOWLEDGED or has been transmitted a given number of times without acknowledgment. Preferably, when no message is being output, the ticket output process 808 checks to see if an input message has requested a trading ticket. Is so, the trading ticket is retrieved, a message is created according to the type of ticket by use of the Field List, and the new message is marked for output to the back office computer. When no ticket is being requested, the ticket output process 808 preferably checks if the status record has been requested. If so, the status data is preferably obtained and the status record is set up for output in a similar way to the trading ticket output. If, however, no status is requested, then the ticket output process 808 preferably checks to see if the status has been marked as changed by the ticket data base process 816. If a change is detected, the flag indicating the change is preferably cleared. The logic then preferably checks if the status record is currently requested in an updating mode. If this has occurred, the new status is preferably output on the line and the ticket output process 808 creates a new status in the output message buffer 812 and then arranges that it will output the message. In the aforementioned implementation, the status record is preferably updated by retransmission of the whole status record. If none of the above conditions exist, the ticket output process 808 then preferably tries to find a complete new input message. If this succeeds, the ticket output process 808 preferably analyzes the input message. A valid message causes a change in the analysis data. The analysis of a valid message requesting data sets flags which then cause the ticket output process 808 to generate the requested output as it is rescheduled repeatedly. Other valid messages just change the current state of the analysis data, whereas invalid messages cause the ticket output process 808 to generate an appropriate error response. The above described procedure is illustrated in the flow diagram of Fig. 32.

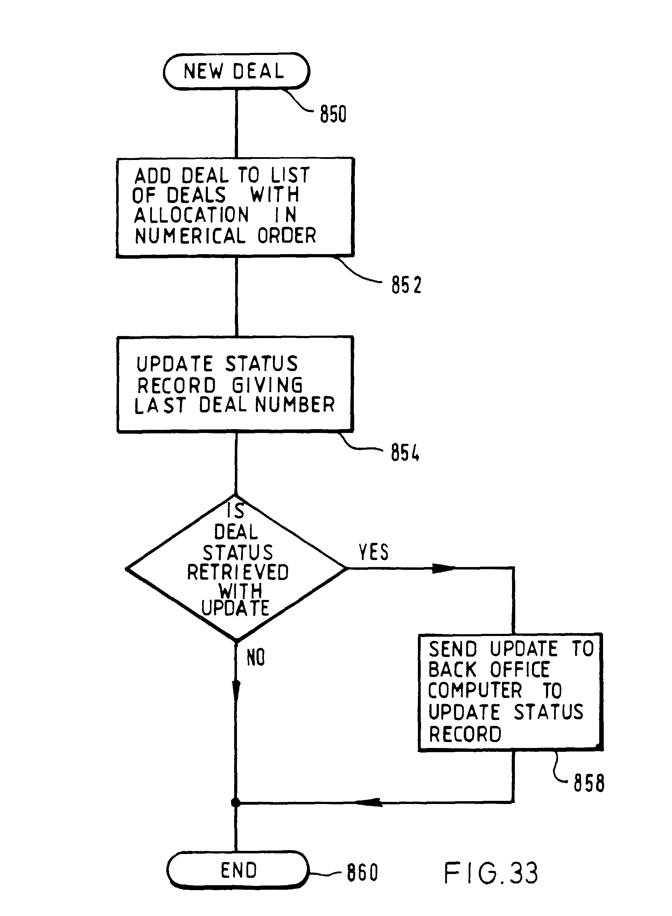

Referring now to Fig. 33 the operation of the terminal controller data base server 262 when a new trading ticket has been generated is shown. Thus, when a new deal is generated, as represented by reference numeral 850, the trading ticket corresponding to the deal is added to the list of deals, with allocations of the deals or tickets being in numerical order as was previously described, such as represented by reference numeral 852. The status record is then updated, giving the last deal number, as represented by reference numeral 854, and a determination is made as to whether the deal status is being retrieved with an update, as represented by reference numeral 856. If the deal status is being retrieved with an update, the update is sent to the back office computer to update the status record, such as represented by reference numeral 858, and if it is not, then the routine ends, as represented by reference numeral 860.

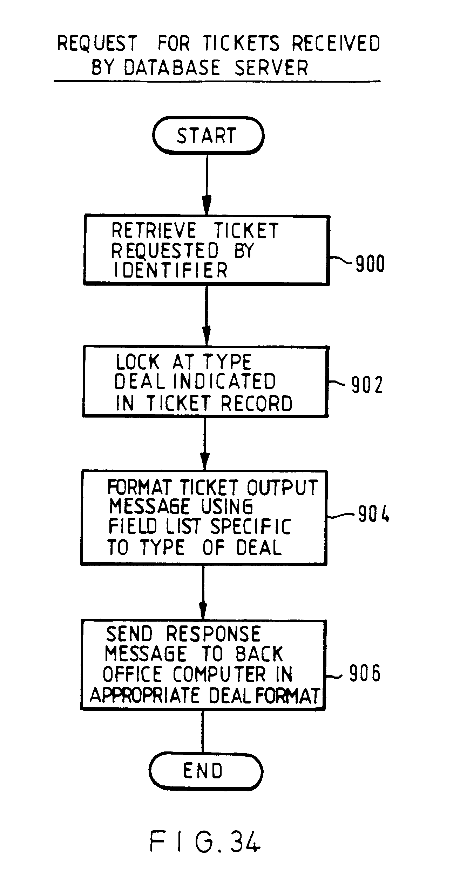

Referring now to Fig. 34, a flow chart is shown of the operation of the local data base server 262, with respect to requests for tickets received by the local data base server 262 from the back office computer. Thus, the trading ticket requested by the back office computer is requested by Deal Identifier, which, as previously mentioned, does not specify the type of deal. This is represented by reference numeral 900. The type of deal indicated is then looked at in the ticket record being retrieved, as represented by reference numeral 902, and the ticket output message is then formatted using the Field List specific to the type of deal, as represented by reference numeral 904 in Fig. 34. The formatted record response message, which now contains information as to the type of deal, as well as the various parameters and values associated with them, is then sent to the back office computer in the appropriate deal format, based on the Field List contained in the retrieved record and, for the first time, the back office computer finds out what type of deal was involved with the request. This is represented by reference numeral 906. It should be noted, as previously mentioned, the request by the back office computer and the response to the back office computer from the local database server 262, contain a "Tag" which identifies the particular request being made.

Thus, by employing the integrated trading method of the present invention, the speed and reliability of both automatic matching and negotiated video conversational trades may be combined in a single system to provide individual subscribers with maximum flexibility and optimal efficiency to effectuate and complete the type of trade demanded by the time and circumstances available, and to generate a ticket corresponding to the trade, irrespective of the type of trade transacted.

In the first aspect of the invention as defined by Claim 1, the system may further comprise a second interface means connectably disposed between at least one of said keystation means in said second plurality of keystation means and said first communication means for selectively interfacing said one of said keystation means in said second plurality of keystation means with said first communication means, said one of said keystation means in said second plurality of keystation means comprising video display means capable of displaying both said bids and said offers. The common data input means may further comprise means for toggling between said matching trades and said video conversational negotiated trades for selectively effectuating said trades via said one of said keystation means in said second plurality of keystation means. On of the keystation means in said second plurality of keystation means further comprises means for selectively varying the content of the display on said common video display means in response to said toggling of said data input means.

In the first aspect of the invention as set out in Claim 1, the keystation means may comprise a computer means. Whether it does or not, the interface means may comprise a conversation server means for interfacing said video conversational textual data messages with said first communication means. Whether it does or not, the interface means may comprise a concentrator computer means for interfacing said bids and said offers with said first communication means. When the keystation means does comprise a computer means, the data input means may further comprise means for periodically providing a keep alive signal to said keystation computer means, said keystation computer means comprising means responsive to said periodically provided keep alive signal for deleting said selectively provided bids and offers selectively provided from said keystation means associated with a given data input means when said keep alive signal periodically provided from said associated data input means is not provided. The means responsive to said periodically provided keep alive signal may comprise means for automatically terminating contact with all other keystation means in said system for a given keystation means associated with said given data input means when said keep alive signal periodically provided from said associated given data input means is not provided.

In the first aspect of the invention as set out in Claim 1, the interface means may comprise a uniquely identifiable local data base for initially collecting trading ticket information relating to both said automatically matched trades for said trading instruments and video conversational negotiated trades for said trading instruments, and means for communicating said collected trading ticket information to a remote back office data base; whereby a common ticket generation scheme may be employed in said integrated trading system for said trading instruments irrespective of the type of trade. The interface means may further comprise and integrated terminal controller means connectably disposed between said keystation means, said first communication means, and said uniquely identifiable local data base for selectively interfacing said keystation means with said first communication means. Alternatively, the interface means may further comprise means for initially collecting said trading ticket information corresponding to said trades as self-contained integral trading ticket records and storing said self-contained integral records at said uniquely identifiable local data base. The collecting and storing means may further comprise means for storing said self-contained integral records at said uniquely identifiable local data base unique identification and a sequential number corresponding to the order of confirmation of each of said trades at said local data base. The sequential numbers may be independent of the type of trade conducted through said integrated system. The system may further comprise means for retrievably requesting trading tickets from said local data base for providing said trading tickets to said remote back office data base independent of the type of trade involved.

In the first aspect of the invention as set out in Claim 1, the system my further comprise a host computer means for maintaining a host book data base comprising all of the active bids and offers associated with said matching transactions in the system by trading instrument, at least one of said first plurality of keystation means comprising a transaction originating keystation means for providing a bid on a given trading instrument to said system for providing a potential matching transaction and at least one of said second plurality of keystation means comprising a counterparty keystation means for providing an offer on said given trading instrument involved in said potential matching transaction, said first communication means interconnecting said host computer means, said transaction originating keystation means and said counterparty keystation means in said integrated system for enabling data commnication therebetween for effectuating said automatically provided matching transactions. The host computer means may comprise means for processing said matching transaction for a given trading instrument in time order entry to said system. Alternatively, both said transaction originating keystation means and said counterparty keystation means for said potential matching transaction may each have an associated local data base keystation book comprising a subset of said host book. The keystation means associated with said potential matching transaction may comprise means for displaying said associated keystation book on video display means. Alternatively, the content of each of said keystation books may have an associated display depth range controllable by said host computer means and being updatable by transaction update broadcast messages received from said host computer means through said first communication means. The transaction originating keystation means and said counterparty keystation means comprise means responsive to said received transaction update broadcast messages for updating said associated keystation books and means for providing directed messages to said host computer means corresponding to said bid and offer, respectively, said direct messages updating said host book. The host computer means may comprise means for conditionally providing said transaction broadcast update meassages to said keystation means associated therewith in response to the presence of an update condition, said update condition comprising updating of said host book and said received bid or offers within said host book having a relative value compared with other bids or offers within said host book which is within said keystation book display depth range of relative values; whereby controllable subsets of a distributable system trading book may be selectively provided to trading keystations in said integrated system from the host for controllably masking the available trading market for said automatically matched trades.

In the first aspect of the invention as set out in Claim 1, the data input means may further comprise means for periodically providing a keep alive signal to said interface means, said interface means comprising means responsive to said periodically provided keep alive signal for automatically terminating contact with all other keystation means in said system for a given keystation means associated with said given data input means when said keep alive signal periodically provided from said associated given data input means is not provided.

In the second aspect of the invention as set out in Claim 8, the common data input means may further comprise means for toggling between said matching trades and said video conversational negotiated trades for selectively effectuating said trades via said first keystation means. The first keystation means may further comprise means for selectively varying the content of the display on said common video display means in response to said toggling of said data input means. The means for selectively varying the display content of said common video display means may comprise means for varying the format of said display on said common video display means in response to said toggling of said data input means.

In the second aspect of the invention as set out in Claim 8, the system may further comprise a second integrated terminal contorller means connectably disposed between at least a second keystation means and said data communication network for selectively interfacing said second keystation means with said data communication network, said second keystation means comprising a common video display means capable of displaying both said bids and said offers associated with said matching transactions and said video conversational textual data messages associated with said negotiated trades, and a common data input means for selectively inputting both said video conversational textual data messages to said data commnication network through said second integrated terminal controller means for effectuating said video conversational negotiated trades and said bids and said offers to said data commnication network through said second integrated terminal controller means for effectuating said automatically provided matching transactions.

In the second aspect of the invention as set out in Claim 8, the integrated terminal controller means may comprise a concentrator computer means for interfacing said bids and said offers with said data communication network. Alternatively, it may comprise a conversation server means for interfacing said video conversational textual data messages with said data communication network. In this case, the conversation server means may further comprise common data base means for integrating trade data relating to both said bids and said offers and said video conversational textual data messages. Alternatively, the integrated terminal controller means may further comprise a concentrator computer means for interfacing said bids and said offers with said data communication network. The integrated terminal controller means may further comprise a local area network means for tieing said conversation server means and said concentrator computer means together. The first keystation means may comprise a terminal computer means, said terminal computer means being tied to said local area network means.

In the second aspect of the invention as set out in Claim 8, the first keystation means may comprise a computer means. The data input means may further comprise means for periodically providing a keep alive signal to said first keystation computer means, said first keystation computer comprising means responsive to said periodically provided keep alive signal for deleting said selectively provided bids and offers selectively provided from said first keystation means associated with said data input means when said keep alive signal periodically provided from said data input means is not provided. The means responsive to said periodically provided keep alive signal comprises means for automatically terminating contact with all other keystation means in said system for said first keystation means associated with said given data input means when said keep alive signal periodically provided from said associated data input means is not provided.

In the second aspect of the invention as set out in Claim 8, the integrated terminal controller means may comprise a uniquely identifiable local data base for initially collecting trading ticket information relating to both said automatically matched trades for said trading instruments and video conversational negotiated trades for said trading instruments, and means for communicating said collected trading ticket information to a remote back office data base; whereby a common ticket generation scheme may be employed in said integrated trading system for said trading instruments irrespective of the type of trade. The integrated terminal controller means may further comprise means for initially collecting said trading ticket information corresponding to said trades as self-contained integral trading ticket records and storing said self-contained integral records at said uniquely identifiable local data base. Alternatively, the integrated terminal controller means may comprise a conversation server means for interfacing said video conversational textual data messages with said communication network. The conversation server means may comprise means for communicating said collected trading ticket information to said remote back office data base.

In the second aspect of the invention as set out in Claim 8, at least said first keystation means may further comprise pointer means for locating data display areas in a windowed textual video display on said video display means, and storage means for retrievably storing a plurality of unique keystation contact signals capable of initiating conversation contact with at least one of said other keystation means through said data communication network, each of said other keystation means having a unique associated identification code, said keystation contact signals corresponding to said unique associated identification codes, said windowed textual video display comprising a windowed display of at least one of said unique associated idenficiation codes, said pointer means comprising means capable of locating said windowed display of said unique associated identification code in said windowed textual video display and providing a conversational contact message signal to said keystation storage means in response thereto for retrieving said unique keystation contact signal corresponding to said located unitque assocated identification code for providing a calling signal to said corresponding keystation means through said data commnication network. The pointer means may comprise a mouse.

In the second aspect of the invention as set out in Claim 8, the system may further comprise interface means comprising said integrated terminal controller means and a uniquely identifiable local data base for initially collecting trading ticket information relating to both said automatically matched trades for said trading instruments and video conversational negotiated trades for said trading instruments, and means for communicating said collected trading ticket information to a remote back office data base, whereby a common ticket generation scheme may be employed in said integrated trading system for said trading instruments irrespective to the type of trade.

In the second aspect of the invention as set out in Claim 8, the system may further comprise a host computer means for maintaing a host book data base comprising all of the active bids and offers associated with said matching transactions in the system by trading instrument, at least said first keystation means comprising a transaction originating keystation means for providing a bid on a given trading instrument to said system for providing a potential matching transaction and at least on of said other keystation means comprising a counterparty keystation means for providing an offer on said given trading instrument involved in said potential matching transaction, said data communication network interconnecting said host computer means, said transaction originating keystation means and said counterparty keystation means in said integrated system for enabling data communication therebetween for effectuating said automatically provided matching transaction. Both said transaction originating keystation means for said potential matching transaction each have an associated local data base keystation book comprising a subset of said host book. Alternatively or in addition, both said transaction originating keystation means and said counterparty keystation means for said potential matching transaction each have an associated local data base keystation book comprising a subset of said host book.

In the second aspect of the invention as set out in Claim 8, the data input means may further comprise means for periodically providing a keep alive signal to said integrated terminal controller means, said integrated terminal controller means comprising means responsive to said periodically provided keep alive signal for automatically terminating contact with all other keystation means in said system for said first keystation means associated with said data input means when said keep alive signal periodically provided from said associated data input means is not provided.

In the third aspect of the invention as set out in Claim 9, the method may further comprise the step of sharing the use of said data input means at said given keystation means for inputting said bids and said offers associated with said matching transactions and said video conversational textual data messages associated with said video conversational negotiated trades. Whether it does or not, the method may further comprise a step of integrating initial access to both said matching trades and said video conversational negotiated trades in said separate networks. Separate networks may be for the given keystation means for enabling the given keystation means selectively to effect both said automatic matching trades and said video conversational negotiated trades through said separate networks.

In the third aspect of the invention as set out in Claim 9, the method may further comprise a step of sharing the use of said data input means for a given keystation means for selectively providing transactional data with respect to both said automatic matching trades and said video conversational negotiated trades to said system. In the third or fourth aspects of the invention as set out in Claims 9 and 10 respectively, the method may further comprise a step of retrievably storing completed trades from both said automatic matching trades and said video conversational negotiated trades together.

In the fourth aspect of the invention as set out in Claim 10, the method may further comprise a step of commonly collecting trading ticket information relating to both said automatically matched trades for trading instruments traded through said first data communication network and said video conversational negotiated trades for trading instruments traded through said second data communication network. There may be a further step of communication said commonly collected trading ticket information to a remote back office data base irrespective of the type of trade effectuated through said integrated terminal controller. Said communicating step may further comprise the step of communicating said collected trading ticket information as self-contained integral trading ticket records.

In the fourth aspect of the invention as set out in Claim 10, the method may fruther comprise the steps of maintaining a host book data base comprising the active bids and offers associated with said matching transactions by trading instrument, and interfacing said given keystation means with said host book data base through said integrated terminal controller for effectuating said automatically provided matching transactions. Whether it does or not, the method may further comprise the step of processing said matching transactions for a given trading instrument in time order entry to said first data commnication network. when it does comprise the step of maintaining a host book data base, it may further comprise a step of locally storing a subset of said host book data base at said given keystation means associated with said potential matching transactions. It may then comprise a step of providing transaction update broadcase messages to said given keystation means through said first data communication network and said integrated terminal controller for updating said locally stored subsets in accordance with said transactional data relating to said automatic matching transactions. The transaction update broadcast message providing step may further comprise the step of selectively providing said update messages in response to a predetermined condition. The update message selective providing step may comprise the step of controllably masking the available trading market for said automatically matched trades at said given keystation means.

In the fourth aspect of the invention as set out in Claim 10, the given keystation means may comprise computer means, said method further comprising the step of periodically providing a keep alive signal from said given keystation data input means to said given keystation computer means, and deleting said bids and offers provided from said given keystation means when said keep alive signal is not periodically provided from said given keystation data input means. The method may then further comprise a step automatically terminating contact with all other keystation means in said system for said given keystation means when said keep alive signal is not periodically provided from said given keystation data input means.

## Claims

1. A trading system for enabling two or more remotely located traders to view and trade one or more than one instrument through a video conversational negotiated trading system, comprising:
a plurality of trader keystations (202,204,206,208), said trader keystations enabling traders to enter trade information including bids and offers of said one or more instruments;
a communications network (218,220) coupled to each of said plurality of keystations for enabling communication therebetween of video conversational negotiated trade communications comprising trades in which video conversational textual data messages are selectively routed between potential counterparties with respect to bids and offers for given trading instruments for enabling discretionary conversational messages to be exchanged between said potential counterparties;
a computer (224) coupled to said communications network for receiving and storing said trade information entered by each trader;
each of said plurality of trader keystations including display means (238) for enabling the trader to monitor said video conversational negotiated trade communications, and input means (240,242) for enabling the trader to input said video conversational textual data messages;
and a plurality of keystation interface devices (214,216) coupled to said plurality of trader keystations for selectively enabling trading communications between at least two traders via said communications network;
characterized in that the trading system integrates automatic matching with the video conversational negotiated trading, enabling the remotely located traders to view and trade one or more than one instrument through an integrated automatic matching and video conversational negotiated trading system, said trading communications comprising automatic matching trade communications corresponding to trades in which bids from potential counterparties are automatically matched against offers from potential counterparties for given trading instruments, said computer (224) being for automatically matching compatible bids and offers of said one or more than one instrument, each said trader keystation display means (238) enabling the trader to monitor said automatic matching trade communications, and each said trader keystation input means (240,242) enabling the trader to input said automatic matching trade communications.

2. An integrated trading system according to claim 1, in which said communications network comprises separate communication paths for said automatic matching trade communications and said video conversational negotiated trade communications.

3. An integrated trading system according to claim 1, in which said communications network comprises a common communication path for said automatic matching trade communications and said video conversational negotiated trade communications.

4. An integrated trading system according to claim 3, in which said plurality of keystation interface devices comprises a local area network.

5. An integrated trading system according to claim 1, in which said input means comprises a common data input means (240,242) for selectively inputting both said automatic matching trade communications and said video conversational negotiated trade communications.

6. An integrated trading system according to any preceding claim, in which the input means (240, 242) comprise means for periodically providing a keep alive signal to said interface devices, said interface devices comprising means responsive to said periodically-provided keep alive signal for automatically terminating contact with all other keystation devices in said system for a given keystation device associated with said given input means when said keep alive signal periodically provided from said associated given data input means is not provided.

## Patentansprüche

1. Handelssystem, welches derart gestaltet ist, daß zwei oder mehr entfernt gelegene Händler ein oder mehr als ein Instrument über ein Videokonversationsverhandlungs-Handelssystem betrachten und verhandeln, welches aufweist:
eine Vielzahl von Händler-Tastaturstationen (202, 204, 206, 208), wobei die Händler-Tastaturstationen die Händler befähigen, Handelsinformationen einschließlich Gebote und Angebote von dem einen oder den mehreren Instrumenten einzugeben;
ein Kommunikationsnetzwerk (218, 220), welches mit jeder der Vielzahl von Tastaturstationen verbunden ist, zum Ermöglichen einer Kommunikation von Videokonversationsverhandlungs-Handelskommunikationen dazwischen mit Handeln, mit denen Videokonversötions-Textdatennachrichten selektivermaßen zwischen möglichen Gegenparteien bezüglich Geboten und Angeboten für vorgegebene Handelsinstrumente geleitet werden, um den Austausch von diskreten Konversationsnachrichten zwischen den möglichen Gegenparteien zu ermöglichen;
einen Computer (224), welcher mit dem Kommunikationsnetzwerk verbunden ist, zum Empfangen und Speichern der durch jeden Händler eingegebenen Handelsinformationen;
wobei jede der Vielzahl von Händlerstationen eine Anzeigeeinrichtung (238) aufweist, welche den Händler befähigt, die Videokonversationsverhandlungs-Handelskommunikationen zu überwachen, sowie eine Eingabeeinrichtung (240, 242), welche den Händler befähigt, die Videokonversations-Textdatennachrichten einzugeben;
und eine Vielzahl von Tastaturstations-Schnittstellenvorrichtungen (214, 216), welche mit der Vielzahl von Händler-Tastaturstationen verbunden sind, zum selektiven Ermöglichen von Handelskommunikationen zwischen zumindest zwei Händlern über das Kommunikationsnetzwerk;
dadurch gekennzeichnet, daß das Handelssystem eine automatische Anpassung mit dem Videokonversationsverhandlungs-Handel integriert, welche die entfernt gelegenen Händler befähigt, ein oder mehr als ein Instrument durch ein integriertes automatisches Anpassungs- und Videokonversationsverhandlungs-Handelssystem zu betrachten und zu verhandeln, wobei die Handelskommunikationen automatische Anpassungshandelskommunikationen aufweisen entsprechend von Handeln, bei denen Gebote von möglichen Gegenparteien automatisch gegenüber Angeboten von möglichen Gegenparteien für vorgegebene Handelsinstrumente angepaßt werden, wobei der Computer (224) zum automatischen Anpassen kompatibler Gebote und Angebote von dem einen oder mehr als einen Instrument gestaltet ist, wobei jede Händlertastaturstations-Anzeigeeinrichtung (238) den Händler befähigt, die automatischen Anpassungshandelskommunikationen zu überwachen, und wobei jede Händlertastaturstations-Eingabeeinrichtung (240, 242) den Händler befähigt, die automatischen Anpassungshandlungskommunikationen einzugeben.

2. Integriertes Handelssystem nach Anspruch 1, bei dem das Kommunikationsnetzwerk separate Kommunikationswege für die automatischen Anpassungshandelskommunikationen und die Videokonversationsverhandlungs-Handelskommunikationen aufweist.

3. Integriertes Handelssystem nach Anspruch 1, bei dem das Kommunikationsnetzwerk einen gemeinsamen Kommunikationsweg für die automatischen Anpassungshandelskommunikationen und die Videokonversationsverhandlungs-Handelskommunikationen aufweist.

4. Integriertes Handelssystem nach Anspruch 3, bei dem die Vielzahl von Tastaturstations-Schnittstellenvorrichtungen ein Lokalbereichsnetzwerk aufweist.

5. Integriertes Handelssystem nach Anspruch 1, bei dem die Eingabeeinrichtung eine gemeinsame Dateneingabeeinrichtung (240, 242) zum selektiven Eingeben von sowohl den automatischen Anpassungshandelskommunikationen und den Videokonversationsverhandlungs-Handelskommunikationen aufweist.

6. Integriertes Handelssystem nach einem der vorhergehenden Ansprüche, bei dem die Eingabeeinrichtung (240, 242) eine Einrichtung zum periodischen Bereitstellen eines Lebenserhaltungssignals für die Schnittstellenvorrichtungen aufweist, wobei die Schnittstellenvorrichtungen eine Einrichtung aufweisen, die auf das periodisch bereitgestellte Lebenserhaltungssignal anspricht, zum automatischen Beenden eines Kontakts mit allen anderen Tastaturstationsvorrichtungen in dem System für eine gegebene Tastaturstationsvorrichtung, welche der vorgegebenen Eingabeeinrichtung zugeordnet ist, wenn das Lebenserhaltungssignal periodisch von der zugehörigen vorgegebenen Dateneingabeeinrichtung nicht bereitgestellt wird.

## Revendications

1. Système de transaction pour permettre à deux ou plus de deux partenaires de transaction situés à distance de visualiser et de réaliser une transaction sur un ou plus d'un titre par l'intermédiaire d'un système de transaction négociée conversationnelle vidéo, comprenant:
une pluralité de postes à clavier de partenaire de transaction (202, 204, 206, 208), lesdits postes à clavier de partenaire de transaction permettant à des partenaires de transaction d'entrer une information de transaction incluant des soumissions et des offres desdits un ou plusieurs titres;
un réseau de communication (218, 220) couplé à chacun de ladite pluralité de postes à clavier pour permettre une communication entre eux de communications de transaction négociée conversationnelle vidéo comprenant des transactions selon lesquelles des messages de données textuels conversationnels vidéo sont sélectivement aiguillés entre des contreparties potentielles en ce qui concerne des soumissions et des offres pour des titres de transaction donnés pour permettre l'échange de messages conversationnels discrétionnaires entre lesdites contreparties potentielles;
un ordinateur (224) couplé audit réseau de communication pour recevoir et stocker ladite information de transaction entrée par chaque partenaire de transaction:
chacun de ladite pluralité de postes à clavier de partenaire de transaction incluant des moyens d'affichage (238) pour permettre au partenaire de transaction de surveiller lesdites communications de transaction négociée conversationnelle vidéo et des moyens d'entrée (240, 242) pour permettre au partenaire de transaction d'entrer lesdits messages de données textuels conversationnels vidéo; et
une pluralité de dispositifs d'interface de poste à clavier (214, 216) couplés à ladite pluralité de postes à clavier de partenaire de transaction pour permettre de façon sélective des communications de transaction entre au moins deux partenaires de transaction via ledit réseau de communication;
caractérisé en ce que le système de transaction intègre un accord automatique concernant la transaction négociée conversationnelle vidéo, ce qui permet aux partenaires de transaction situés à distance de visualiser et de réaliser une transaction sur un ou plus d'un titre par l'intermédiaire d'un système intégré à accord automatique et de transaction négociée conversationnelle vidéo, lesdites communications de transaction comprenant des communications de transaction à accord automatique correspondant à des transactions selon lesquelles des soumissions en provenance de contreparties potentielles sont mises automatiquement en accord avec des offres en provenance de contreparties potentielles pour des titres de transaction donnés, ledit ordinateur (224) étant prévu pour mettre automatiquement en accord des soumissions et des offres compatibles dudit un ou plus d'un titre, chacun desdits moyens d'affichage de poste à clavier de partenaire de transaction (238) permettant au partenaire de transaction de surveiller lesdites communications de transaction à accord automatique et chacun desdits moyens d'entrée de poste à clavier de partenaire de transaction (240, 242) permettant au partenaire de transaction d'entrer lesdites communications de transaction à accord automatique.

2. Système de transaction intégré selon la revendication 1, dans lequel ledit réseau de communication comprend des voies de communication séparées pour lesdites communications de transaction à accord automatique et lesdites communications de transaction négociée conversationnelle vidéo.

3. Système de transaction intégré selon la revendication 1, dans lequel ledit réseau de communication comprend une voie de communication commune pour lesdites communications de transaction à accord automatique et lesdites communications de transaction négociée conversationnelle vidéo.

4. Système de transaction intégré selon la revendication 3, dans lequel ladite pluralité de dispositifs d'interface de poste à clavier constitue un réseau local.

5. Système de transaction intégré selon la revendication 1, dans lequel lesdits moyens d'entrée comprennent des moyens d'entrée de données communs (240, 242) pour entrer sélectivement à la fois lesdites communications de transaction à accord automatique et lesdites communications de transaction négociée conversationnelle vidéo.

6. Système de transaction intégré selon l'une quelconque des revendications précédentes, dans lequel les moyens d'entrée (240, 242) comprennent des moyens pour appliquer périodiquement un signal de maintien en activité sur lesdits dispositifs d'interface, lesdits dispositifs d'interface comprenant des moyens sensibles audit signal de maintien en activité appliqué périodiquement pour terminer automatiquement un contact avec tous les autres dispositifs de poste à clavier dans ledit système pour un dispositif de poste à clavier donné associé auxdits moyens d'entrée donnés lorsque ledit signal de maintien en activité appliqué périodiquement depuis lesdits moyens d'entrée de données donnés associés n'est pas appliqué.
